# EUROPEAN PATENT APPLICATION

(11) **EP 4 621 466 A1**
(43) Date of publication of application: **24.09.2025**
(21) Application number: 23891709.0
(22) Date of filing: 30.03.2023
(51) Int. Cl.: G02B 7/28, G03B 5/02, G03B 17/12, G02B 27/64, H02K 33/18, G03B 5/06, G03B 3/10, G03B 13/34

(54) **LENS DRIVING DEVICE AND CAMERA DEVICE**

(30) Priority: 18.11.2022 KR 20220155829; 18.11.2022 KR 20220155830
(71) Applicant: LG INNOTEK CO., LTD., Seoul 07796 (KR)
(72) Inventor: PARK, Tae Bong, Seoul 07796 (KR); SEOL, Dong Hyeon, Seoul 07796 (KR)
(74) Representative: Plasseraud IP
(86) International application number: PCT/KR2023/004245
(87) International publication number: WO 2024/106632

(57) **Abstract**

The present embodiment relates to a lens driving device comprising: a housing; a lens holder disposed within the housing; a first magnet disposed in the housing; a second magnet disposed on the lens holder; a first coil that moves the first magnet in an optical axis direction through interaction with the first magnet; a second coil that moves the second magnet in a direction perpendicular to the optical axis through interaction with the second magnet; a first ball disposed between the housing and the lens holder; and a wire movably supporting the lens holder relative to the housing.

## Description

### [Technical Field]

The present embodiments relate to a lens driving device and a camera device.

### [Background of the Invention]

A camera device is a device to shoot (photograph) an object via photographs or videos, and may be installed on an optical device such as a smart phone, a drone or a vehicle.

The camera device requires an OIS (Optical Image Stabilization) function for correcting handshakes or motions of an image caused by motions of a user in order to increase the quality of the image.

However, as the diameter of a lens increases with the recent high pixelation of an image sensor, the driving force required to drive the lens also increases.

### [Disclosure]

### [Technical Field]

The present exemplary embodiments are intended to provide a lens driving device that provides an increased driving force within a limited size.

### [Technical Solution]

A lens driving device according to a first exemplary embodiment of the present invention may comprise: a housing; a lens holder disposed within the housing; a first magnet disposed on the housing; a second magnet disposed on the lens holder; a first coil moving the first magnet to an optical axis direction through interaction with the first magnet; a second coil moving the second magnet to a direction perpendicular to the optical axis through interaction with the second magnet; a first ball disposed between the housing and the lens holder; and an elastic member connecting the housing and the lens holder.

Preferably, the elastic member may be disposed parallel with the direction perpendicular to the optical axis.

Preferably, the elastic member may be coupled to a lower surface of the lens holder and the first ball may be disposed at an opposite side of the elastic member relative to the lens holder.

Preferably, the lens holder may comprise a support part disposed between the first ball and the elastic member to the optical axis direction.

Preferably, the elastic member may comprise an outer part coupled to the housing, an inner part coupled to the lens holder, and a connecting part connecting the outer part and the inner part, wherein the first ball may be overlapped with at least a portion of the connecting part of the elastic member to the optical axis direction.

Preferably, the housing may comprise an upper plate and a lateral plate, and the lateral plate of the housing may be disposed with a first magnet, and the first ball may be disposed between the upper plate of the housing and the lens holder.

Preferably, the lens driving device may comprise an attraction member disposed on the upper plate of the housing to be attracted with the second magnet.

Preferably, the lens driving device may comprise: a base; and a substrate disposed on the base, wherein the housing may be disposed within the base, and the first coil and the second coil may be disposed on the substrate.

Preferably, the lens driving device may comprise: a second ball disposed between the base and the housing and the second ball may comprise a plurality of balls disposed on an imaginary plane parallel with the optical axis.

Preferably, the first ball may comprise a plurality of balls disposed on an imaginary plane perpendicular to the optical axis.

Preferably, the lens driving device may comprise: a metal member disposed on at least any one of the housing and the lens holder, and the first ball may be so disposed as to roll along the metal member.

Preferably, the lens driving device may comprises a retainer in the housing, and the elastic member may be disposed between the housing and the retainer.

Preferably, the second magnet may comprise a first axis driving magnet and a second axis driving magnet disposed perpendicular to a placement direction of the first axis driving magnet.

A camera device according to a first exemplary embodiment of the present invention may comprise: a PCB (Printed Circuit Board); an image sensor disposed on the PCB; a lens driving device disposed on the PCB; and a lens coupled to the lens holder of the lens driving device.

An optical device according to a first exemplary embodiment of the present invention may comprise: a body; a camera device disposed on the body; and a display disposed on the body to output an image photographed by the camera device.

A lens driving device according to a second exemplary embodiment of the present invention may comprise: a housing; a lens holder disposed within the housing; a first magnet disposed on the housing; a second magnet disposed on the lens holder; a first coil moving the first magnet to an optical axis direction through interaction with the first magnet; a second coil moving the second magnet to a direction perpendicular to the optical axis through interaction with the second magnet; a first ball disposed between the housing and the lens holder; and a wire movably supporting the lens holder relative to the housing.

Preferably, the lens driving device may comprise an elastic member coupled to the lens holder, and the wire may be coupled to the elastic member.

Preferably, the lens driving device may comprise a metal member disposed on the housing, and the wire may connect the metal member and the elastic member.

Preferably, the housing may comprise an upper plate and a lateral plate, the first magnet may be disposed on the lateral plate of housing, the metal member may be disposed on the upper plate of housing, an upper end of the housing may be coupled to the metal member, and a lower end of the wire may be coupled to the elastic member.

Preferably, the first ball may be disposed between the upper plate of housing and the lens holder.

Preferably, the first ball may be so disposed as to roll along one surface of the metal member.

Preferably, each of two wires may be respectively disposed on four corner areas of upper plate of housing.

Preferably, the second magnet may comprise a first axis driving magnet and a second axis driving magnet disposed perpendicular to a placement direction of the first axis driving magnet, the wire may comprise a first wire disposed at one side of the first axis driving magnet, and a second wire disposed at the other side of the first axis driving magnet, and an imaginary straight line connecting the first wire and the second wire may pass the first axis driving magnet.

Preferably, the wire may be disposed parallel with the optical axis.

Preferably, the elastic member may be spaced apart from the housing.

Preferably, the lens driving device may comprise: a base; and a substrate disposed on the base, and the housing may be disposed within the base, and the first coil and the second coil may be disposed on the substrate.

Preferably, the lens driving device may comprise a second ball disposed between the base and the housing, the first ball may comprise a plurality of balls disposed on an imaginary plane perpendicular to the optical axis, and the second ball may comprise a plurality of balls disposed on an imaginary plane parallel with the optical axis.

Preferably, the lens driving device may comprise an attraction member disposed on the upper plate of housing to be attracted with the second magnet, and the attraction member may be disposed on an upper surface of the metal member.

A camera device according to a second exemplary embodiment of the present invention may comprise: a PCB; an image sensor disposed on the PCB; a lens driving device disposed on the PCB; and a lens coupled to the lens holder of the lens driving device.

An optical device according to an exemplary embodiment of the present invention may comprise: a body; a camera device disposed on the body; and a display disposed on the body to output an image photographed by the camera device.

### [Advantageous Effects of the Invention]

The driving force may be increased by about 1.5 times when the camera device is at the same height through the present exemplary embodiment compared with a structure separately using a ball guiding an x axis direction driving and a ball guiding a y axis direction driving.

Furthermore, regardless of directions faced by the camera device, the performances of auto focus function and OIS function may be maintained. That is, a performance maintenance aspect in response to posture difference of camera device can be improved.

Furthermore, the crosstalk between x axis direction driving force and y axis direction driving force caused by using a ball guiding both the x axis direction and y axis direction can be solved through elasticity of the elastic member. To be more specific, the phenomenon of moving to y axis direction by the x axis direction driving force and to x axis direction by the y axis direction driving force may be prevented.

Furthermore, the ball dent phenomenon generated after the shock reliance test by applying insert injection on a ball rolling surface of lens holder and housing may be minimized. That is, the ball shape changes such as ball dent or the like may be minimized. Conversely, the phenomenon of any one or more of the lens holder and housing being dented or caved by the ball may be minimized.

Furthermore, an OIS ball can be tightly attached to the housing and the lens holder by a leaf spring through the first exemplary embodiment of the present invention.

Furthermore, the OIS ball may be tightly attached to the housing and the lens holder by the support structure through a wire according the second exemplary embodiment of the present invention.

### [Brief Description of Drawings]

FIG. 1 is a perspective view of a coupled state between a lens driving device and a lens according to a first exemplary embodiment of the present invention.
FIG.2 is a plan of FIG. 1 seen from above.
FIG. 3 is a cross-sectional view taken along line A-A of FIG. 2.
FIG. 4 is a cross-sectional view taken along line B-B of FIG. 2.
FIG. 5 is a cross-sectional view taken along line C-C of FIG. 2.
FIG. 6 is an exploded perspective view of a lens driving device according to a first exemplary embodiment of the present invention.
FIG. 7 is an exploded perspective view of FIG. 6 seen from other direction.
FIG. 8a is a perspective view of a cover being omitted from FIG. 1.
FIG. 8b comprises a plan and a partially enlarged view of a cover being omitted from a lens driving device according to a first exemplary embodiment of the present invention.
FIG. 9 is a perspective view illustrating a configuration related to a moving part of a first exemplary embodiment of the present invention.
FIG. 10 is a perspective view of a lens omitted from FIG. 9 and seen from other direction.
FIG. 11 is a perspective view of FIG. 10 with the retainer omitted.
FIG. 12 is a perspective view illustrating a configuration related to a second moving part according to a first exemplary embodiment of the present invention.
FIG. 13 is a perspective view of a state in which a magnet and an elastic member are omitted from FIG. 12.
FIG. 14 is a perspective view illustrating a metal member, a ball and a yoke of second moving part.
FIG. 15 is a perspective view illustrating a configuration related to a fixed part according to a first exemplary embodiment of the present invention.
FIGS. 16 and 17 are perspective views of FIG. 15 seen from a different direction.
FIG. 18 is a perspective view illustrating a substrate, a coil and a yoke according to a first exemplary embodiment of the present invention.
FIG. 19 is a perspective view illustrating a configuration related to a first moving part according to a first exemplary embodiment of the present invention.
FIG. 20a is a perspective view illustrating a metal member of a first moving part and a metal member of a second moving part.
FIG. 20b is a perspective view illustrating a state in which a housing is inserted by a metal member.
FIG. 20c is a perspective view illustrating a state in which a lens holder is inserted by a metal member.
FIG. 20d is a cross-sectional view illustrating a retainer and related structures according to the present embodiment.
FIG. 20e is a cross-sectional view illustrating the state in which the retainer is omitted and the moving part is moved downward to its maximum in this embodiment.
FIG. 21 is a lateral view illustrating an OIS ball disposed between a metal member of a first moving part and a metal member of a second moving part.
FIG. 22 is a perspective view illustrating a configuration related to a driving device according to a first exemplary embodiment of the present invention.
FIGS. 23 to 24 are views for explaining an auto focus driving of a lens driving device according to a first exemplary embodiment of the present invention.
FIGS. 25 to 27 are views for explaining an OIS driving of a lens driving device according to a first exemplary embodiment of the present invention.
FIG. 28 is an exploded perspective view of a camera device according to a first exemplary embodiment of the present invention.
FIG. 29 is a perspective view of an optical device according to a first exemplary embodiment of the present invention.
FIG. 30a is a perspective view of an optical device according to a first exemplary embodiment of the present invention seen from a direction different from FIG. 29.
FIG. 30b is a perspective view of an optical device according to a modification.
FIG. 31 is a perspective view of a state in which a lens driving device and a lens are coupled according to a second exemplary embodiment of the present invention.
FIG. 32 is a plan of FIG. 31 seen from above.
FIG. 33 is a cross-sectional taken along line A-A of FIG. 32.
FIG. 34 is a cross-sectional view taken along line B-B of FIG. 32.
FIG. 35 is a cross-sectional view taken along line C-C of FIG. 32.
FIG. 36 is an exploded perspective view of a lens driving device according to a second exemplary embodiment of the present invention.
FIG. 37 is an exploded perspective view of FIG. 36 seen from a different direction.
FIG. 38 is a perspective view of a state in which a cover is omitted from FIG. 31.
FIG. 39 is a plan of a state in which a cover is omitted from a lens driving device according to a second exemplary embodiment of the present invention.
FIGS. 40 (a) and (b) are partial enlarged views of a cross-section illustrating an AB ball placement structure of a lens driving device according to a second exemplary embodiment of the present invention.
FIG. 41 is a perspective view illustrating a configuration related to a moving part according to a second exemplary embodiment of the present invention.
FIG. 42 is a partial perspective view of FIG. 41 seen from a different direction.
FIG. 43 is a perspective view of a moving part comprising a housing inserted by a metal member.
FIG. 44 is a bottom perspective view of a moving part according to a second exemplary embodiment of the present invention.
FIG. 45 is a lateral view of a moving part according to a second exemplary embodiment of the present invention.
FIG. 46 is a perspective view illustrating a state of a second moving part being coupled to a metal member of a first moving part through a wire.
FIG. 47 is a perspective view of a configuration related to a second moving part.
FIG. 48a is a perspective view of a state omitted of an AF magnet from FIG. 47.
FIG. 48b is a perspective view illustrating a coupled structure of wire according to a second exemplary embodiment of the present invention.
FIG. 48c is a cross-sectional view illustrating a retainer and related structures according to a second embodiment of the present invention.
FIG. 48d is a cross-sectional view illustrating a state in which the retainer is omitted and the moving part is moved downward to its maximum in the second embodiment of the present invention.
FIG. 49 is a perspective view of a configuration related to a fixed part according to a second exemplary embodiment of the present invention.
FIGS. 50 and 51 are perspective views of a configuration related to a fixed part according to a second exemplary embodiment of the present invention seen from a direction different from FIG. 49.
FIG. 52 is a perspective view illustrating a placement structure of a substrate, a coil and a sensor.
FIG. 53 is a perspective view illustrating a configuration related to a driving part according to a second exemplary embodiment of the present invention.
FIGS. 54 and 55 are views for explaining an auto focus driving of a lens driving device according to a second exemplary embodiment of the present invention.
FIGS. 56 to 58 are views for explaining an OIS driving of a lens driving device according to a second exemplary embodiment of the present invention.
FIG. 59 is an exploded perspective view of a camera device according to a second exemplary embodiment of the present invention.
FIG. 60 is a perspective view of an optical device according to a second exemplary embodiment of the present invention.
FIG. 61 is a perspective view of an optical device seen from a different direction of FIG. 59 according to a second exemplary embodiment of the present invention.
FIG. 62 is a perspective view of an optical device according to a modification.

### [Best Mode]

Now, exemplary embodiments of the present invention will be described in detail with reference to the accompanying drawings.

However, it should be noted that the technical ideas of the present invention should not be construed as limited to some of the explained exemplary embodiments but may be embodied in mutually different various shapes, and one or more elements may be selectively coupled or substituted among exemplary embodiments as long as within the scope of technical concept of the present invention.

Furthermore, unless otherwise defined, all terms (comprising technical and scientific terms) used herein have the same meaning as commonly understood by one of ordinary skill in the art to which this general inventive concept belongs. It will be further understood that terms, such as those defined in commonly used dictionaries, should be interpreted as having a meaning that is consistent with their meaning in the context of the relevant art and/or the present application, and will not be interpreted in an idealized or overly formal sense unless expressly so defined herein.

Furthermore, the terms used in the following exemplary embodiments are not intended to limit the invention but to explain the exemplary embodiments.

As used herein, the singular forms "a", "an" and "the" are intended to comprise the plural forms as well, unless the context clearly indicates otherwise, and when it is described as at least one of "A and (or) B, C (or one or more), it means that one or more combinations of all combinations made of A, B and C may be comprised.

Furthermore, it will be understood that, although the terms first, second, A, B, (a), (b), etc. may be used herein to describe various elements, these elements should not be limited by these terms. These terms are only used to distinguish one element from another element, and the essence, sequence or order of relevant elements is not limited by the terms.

Furthermore it will be understood that when an element is referred to as being "connected", "coupled" or "joined" to another element, it can be directly "connected", "coupled" or "joined" to the other elements or intervening elements may be present.

Furthermore, it will be understood that when an element is referred to as being "upper (above)" or "below (beneath)", the "upper (above)" or "below (beneath)" comprises not only two or more elements being directly "connected", "coupled" or "joined" to the other elements but also one or more elements being formed or disposed between two or more elements.

Furthermore, spatially relative terms, such as "beneath" ("below"), "above" ("upper") and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below.

An "optical axis direction" as used hereinafter may be defined as an optical axis direction of a lens and/or image sensor in a state of being coupled to a lens driving device.

Hereinafter used 'vertical direction' may be a direction parallel with an optical axis direction. The vertical direction may correspond to a 'z axis direction'. Hereinafter-used "horizontal direction' may be a direction perpendicular to a vertical direction. That is, the horizontal direction may be a direction perpendicular to an optical axis. Therefore, the horizontal direction may comprise an 'x axis direction' and a 'y axis direction'.

An "auto focus function" as used hereinafter may be defined as a function of automatically matching a focus relative to an object by adjusting a distance from an image sensor by moving a lens module to an optical axis direction in order to obtain a clear image of the object on the image sensor. Furthermore, an 'auto focus feedback (CLAF, closed-loop auto focus) control' is defined as a real-time feedback control of a lens position by detecting a distance between an image sensor and a lens in order to improve accuracy of focus adjustment.

An "OIS (Optical Image Stabilization)" as used hereinafter may be defined as a function of moving or tilting a lens to a direction perpendicular to an optical axis in order to offset vibration (motion) generated on the image sensor by an external forc
Hereinafter, any one of an 'AF magnet (410)' and an 'OIS magnet (420)' may be called a 'first magnet', and the other one may be called a 'second magnet'.

Hereinafter, any one of 'AF magnet (410)', 'OIS-x magnet (421)' and 'OIS-y magnet (422)' may be called a 'first axis driving magnet', another may be called a 'second axis driving magnet ' and still another may be called a 'third axis driving magnet '. Alternatively, an 'AF magnet (410)', an 'OIS-x magnet (421)' and an 'OIS-y magnet (422)' may be called 'first to third magnet'.

Hereinafter, any one of 'AF coil (430)' and 'OIS coil (440)' may be called a 'first coil', and another may be called a 'second coil'.

Hereinafter, any one of 'OIS ball (510)' and 'AF ball (520)' may be called a 'first ball' and another may be called a 'second ball'.

Hereinafter, any one of 'metal member (230)' of first moving part and 'metal member (330)' of second moving part may be called a 'first metal member' and the other may be called a 'second metal member'.

Hereinafter, any one of 'AF magnet (1410)' and 'OIS magnet (1420)' may be called a 'first magnet', and the other may be called a 'second magnet'.

Hereinafter, any one of 'AF magnet (1410)', 'OIS-x magnet (1421)' and 'OIS-y magnet (1422)' may be called a 'first axis driving magnet', another may be called a 'second axis driving magnet' and still another may be called a 'third axis driving magnet'. Alternatively, an 'AF magnet (1410)', an 'OIS-x magnet (1421)' and an 'OIS-y magnet (1422)' may be called 'first to third magnet'.

Hereinafter, any one of 'AF coil (1430)' and 'OIS coil (1440)' may be called a 'first coil' and the other may be called a 'second coil'.

Hereinafter, any one of 'OIS ball (1510)' and 'AF ball (1520)' may be called a 'first ball' and the other may be called a 'second ball'.

Hereinafter, any one of a 'metal member (1230)' of first moving part and a 'metal member (1330) of second moving part may be called a 'first metal member' and the others may be called a 'second metal member'.

Hereinafter, configuration of a lens driving device according to a first exemplary embodiment of the present invention will be explained with reference to the accompanying drawings.

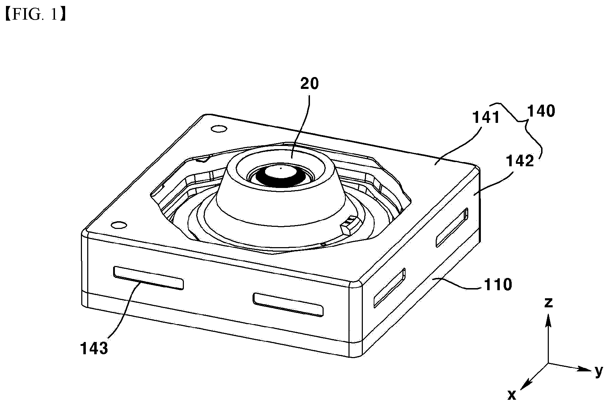

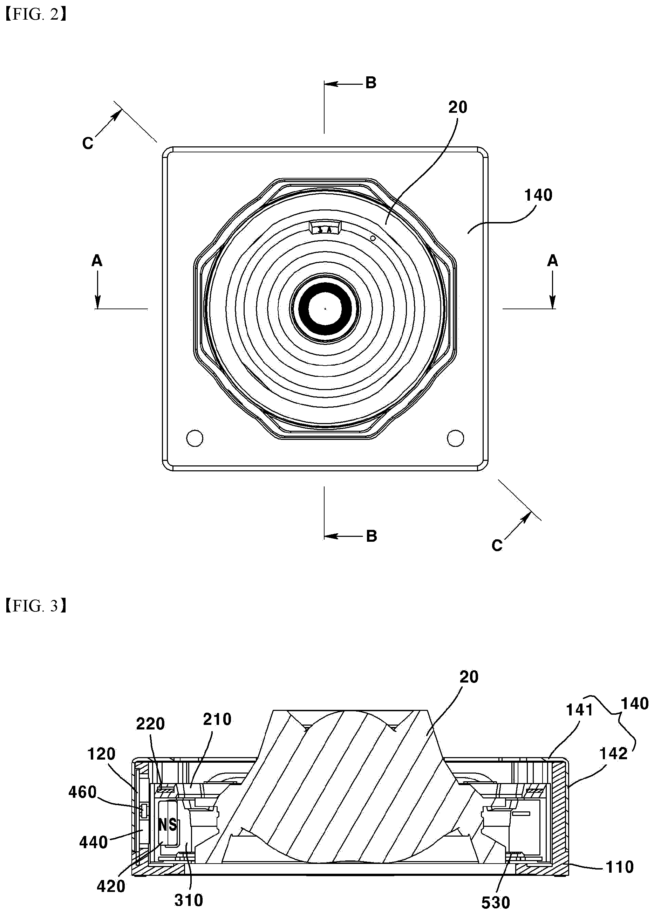

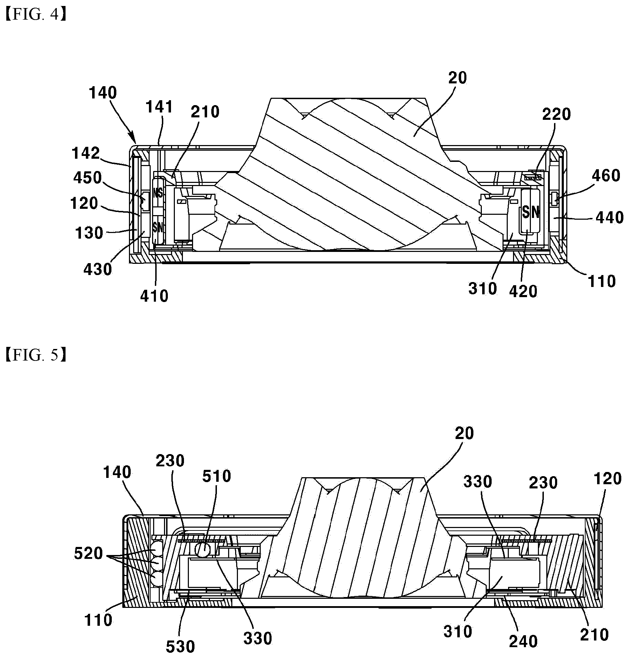

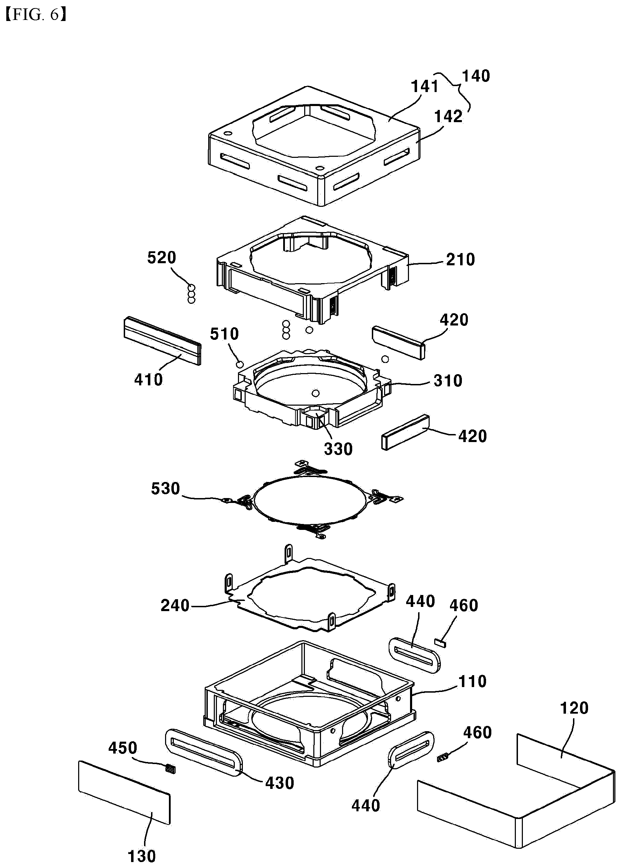

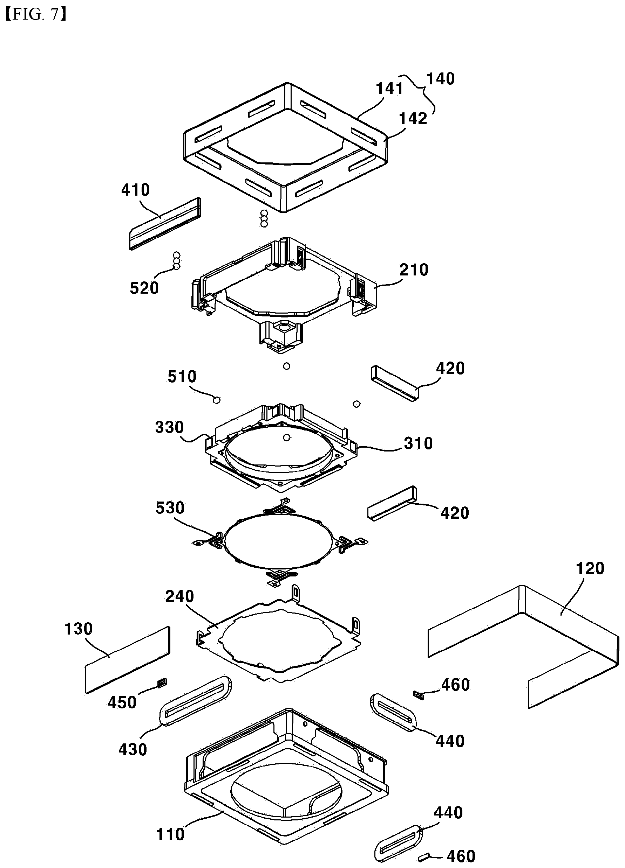

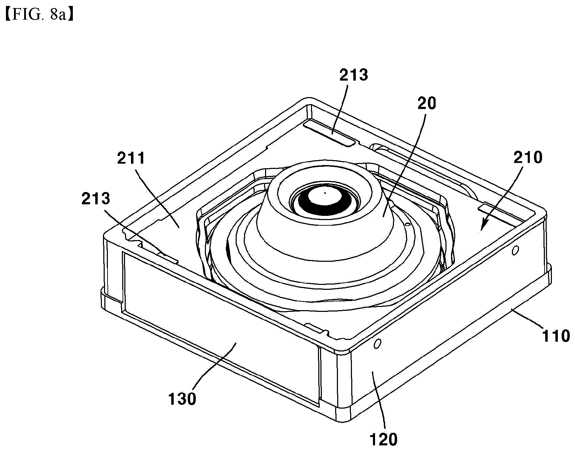

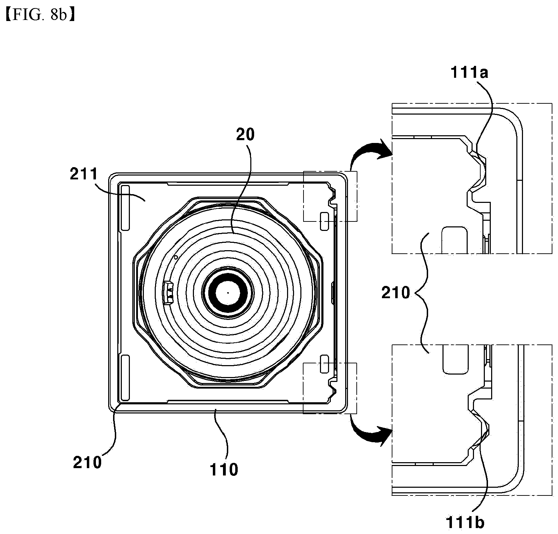

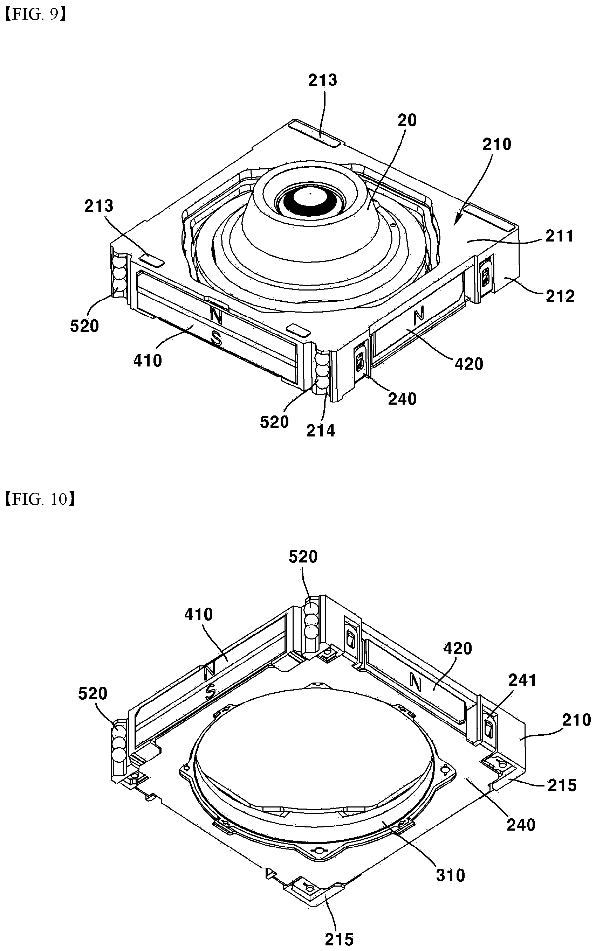

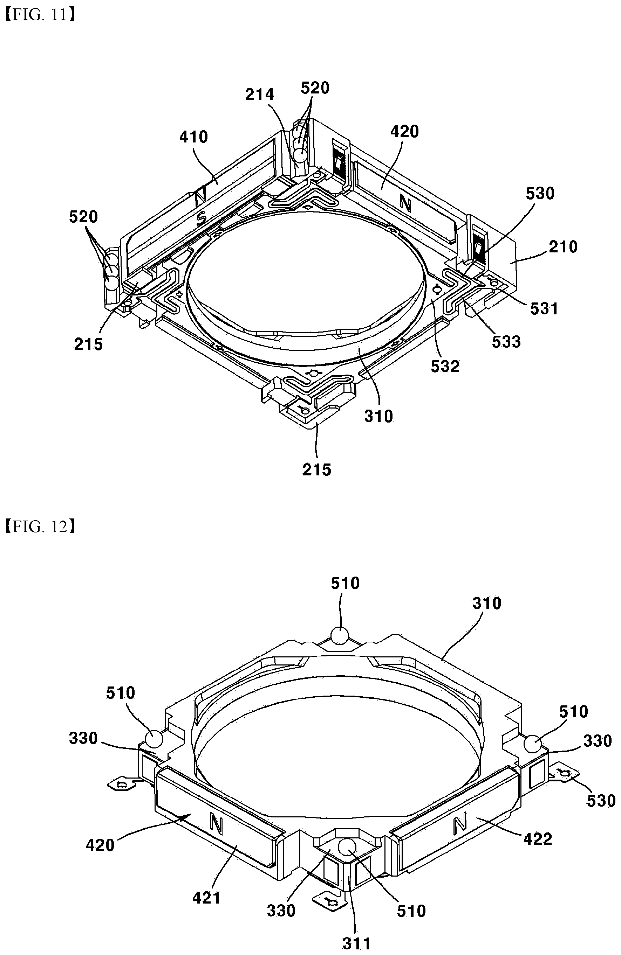

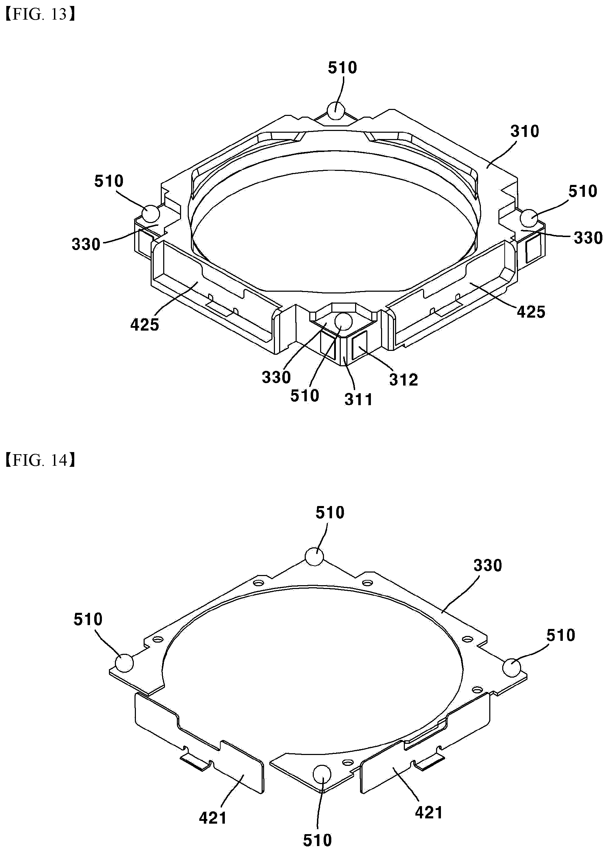

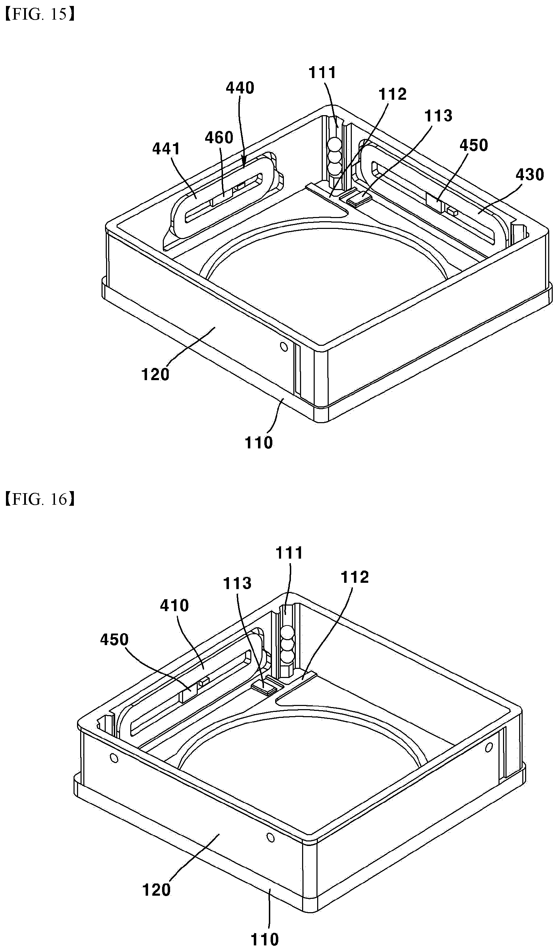

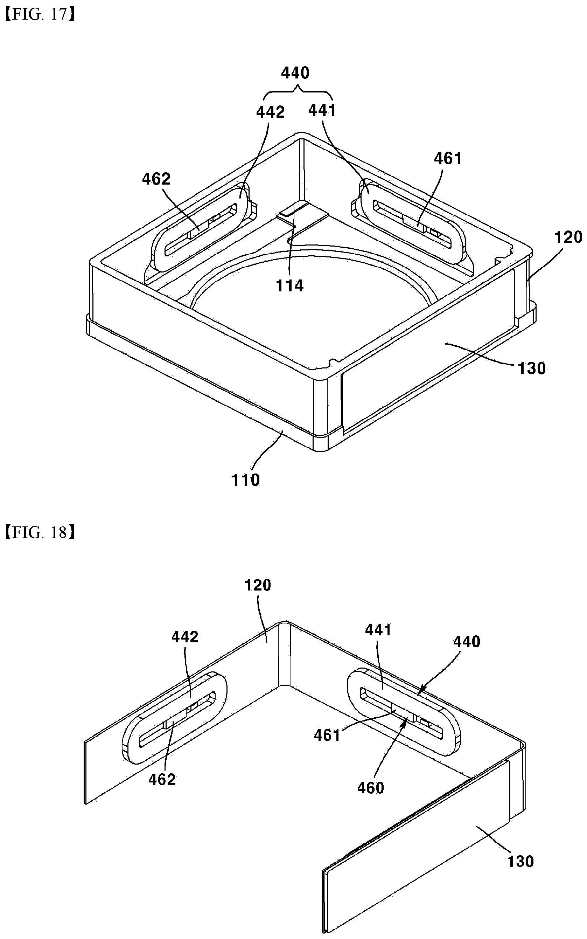

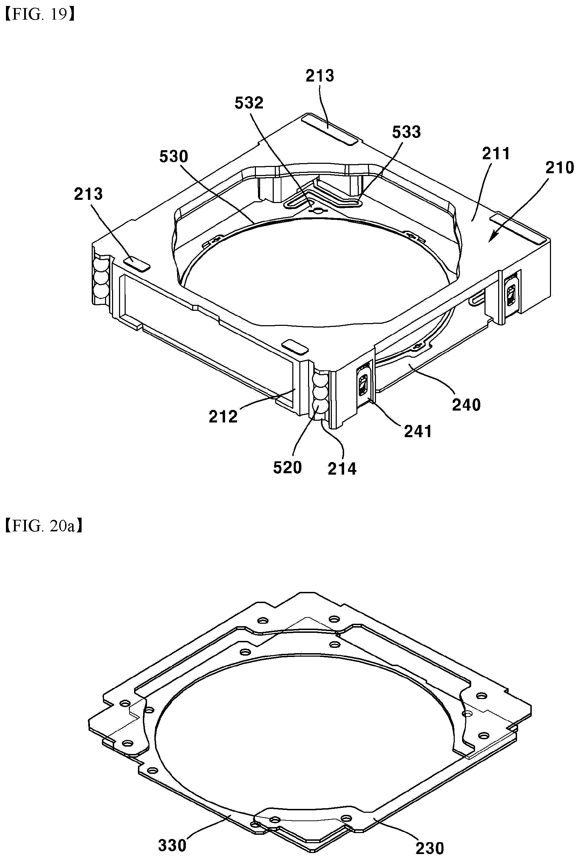

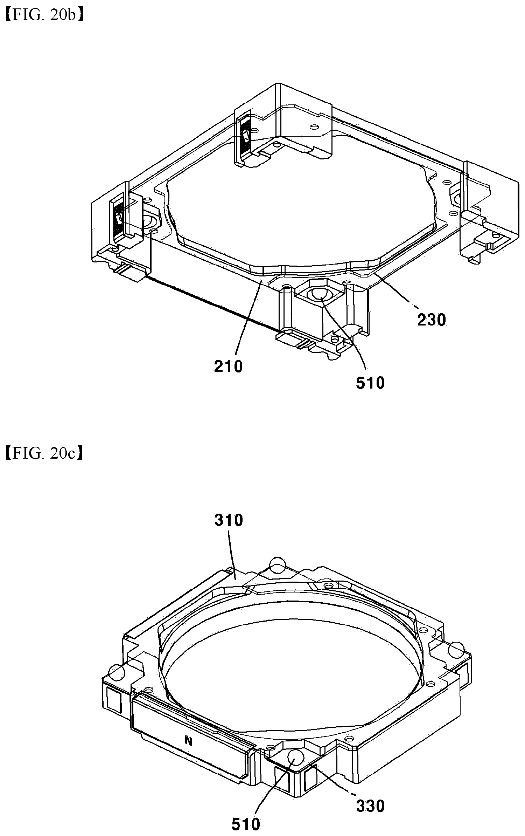

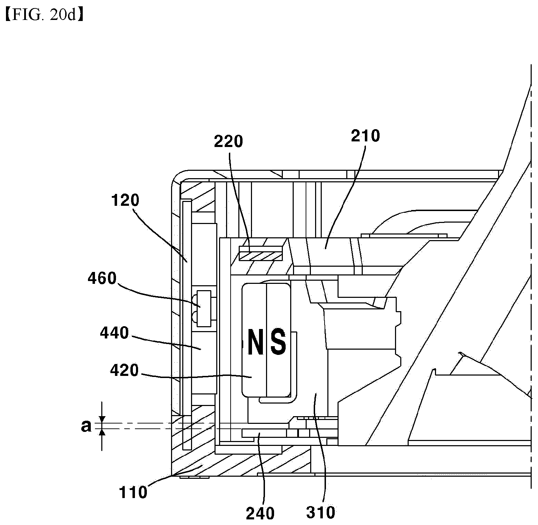

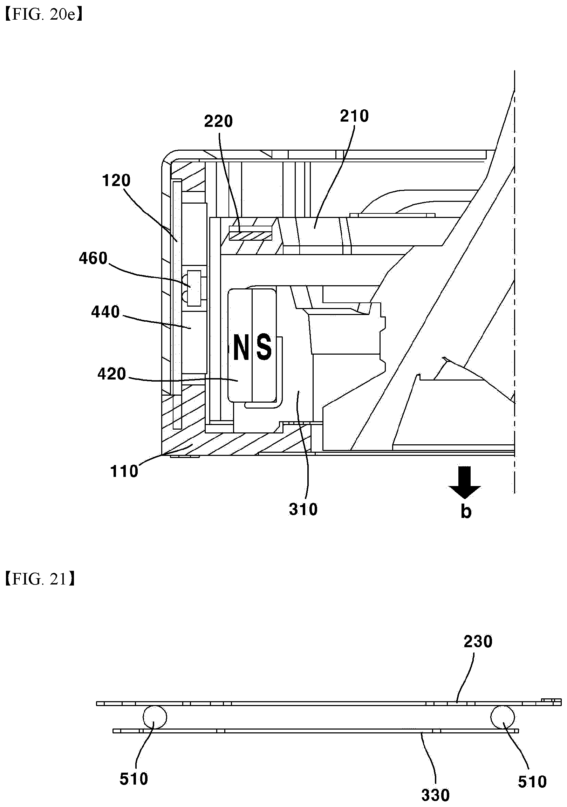

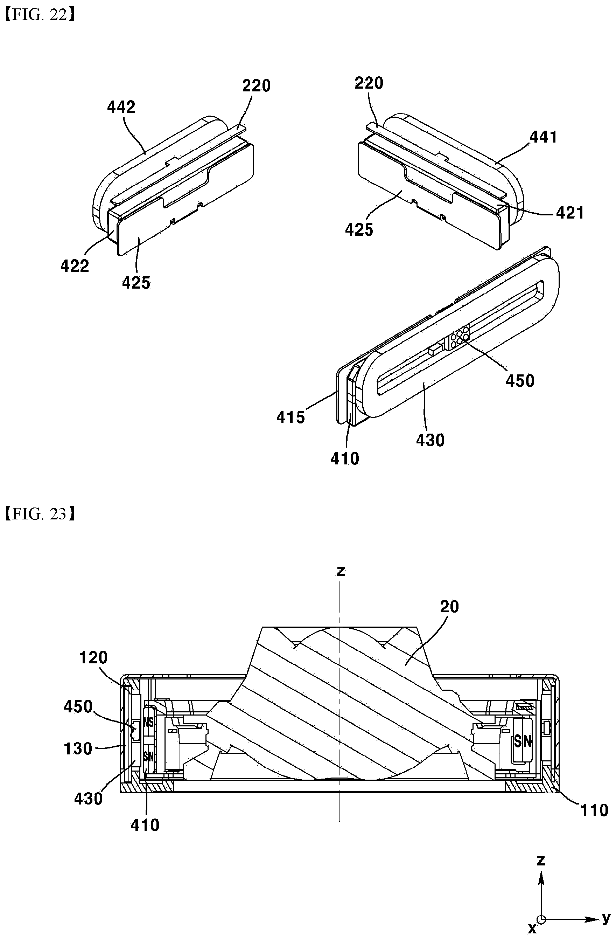

FIG. 1 is a perspective view of a coupled state between a lens driving device and a lens according to a first exemplary embodiment of the present invention, FIG.2 is a plan of FIG. 1 seen from above, FIG. 3 is a cross-sectional view taken along line A-A of FIG. 2, FIG. 4 is a cross-sectional view taken along line B-B of FIG. 2, FIG. 5 is a cross-sectional view taken along line C-C of FIG. 2, FIG. 6 is an exploded perspective view of a lens driving device according to a first exemplary embodiment of the present invention, FIG. 7 is an exploded perspective view of FIG. 6 seen from other direction, FIG. 8a is a perspective view of a cover being omitted from FIG. 1, FIG. 8b comprises a plan and a partially enlarged view of a cover being omitted from a lens driving device according to a first exemplary embodiment of the present invention, FIG. 9 is a perspective view illustrating a configuration related to a moving part of a first exemplary embodiment of the present invention, FIG. 10 is a perspective view of a lens omitted from FIG. 9 and seen from other direction, FIG. 11 is a perspective view of FIG. 10 with the retainer omitted, FIG. 12 is a perspective view illustrating a configuration related to a second moving part according to a first exemplary embodiment of the present invention, FIG. 13 is a perspective view of a state in which a magnet and an elastic member are omitted from FIG. 12, FIG. 14 is a perspective view illustrating a metal member, a ball and a yoke of second moving part, FIG. 15 is a perspective view illustrating a configuration related to a fixed part according to a first exemplary embodiment of the present invention, FIGS. 16 and 17 are perspective views of FIG. 15 seen from a different direction, FIG. 18 is a perspective view illustrating a substrate, a coil and a yoke according to a first exemplary embodiment of the present invention, FIG. 19 is a perspective view illustrating a configuration related to a first moving part according to a first exemplary embodiment of the present invention, FIG. 20a is a perspective view illustrating a metal member of a first moving part and a metal member of a second moving part, FIG. 20b is a perspective view illustrating a state in which a housing is inserted by a metal member, FIG. 20c is a perspective view illustrating a state in which a lens holder is inserted by a metal member, FIG. 20d is a cross-sectional view illustrating a retainer and related structures according to the present embodiment, FIG. 20e is a cross-sectional view illustrating the state in which the retainer is omitted and the moving part is moved downward to its maximum in this embodiment, FIG. 21 is a lateral view illustrating an OIS ball disposed between a metal member of a first moving part and a metal member of a second moving part, and FIG. 22 is a perspective view illustrating a configuration related to a driving device according to a first exemplary embodiment of the present invention.

A lens driving device (10) may be a VCM (Voice Coil Motor). The lens driving device (10) may be a lens driving motor. The lens driving device (10) may be a lens driving actuator. The lens driving device (10) may comprise an AF module. The lens driving device (10) may comprise an OIS module.

The lens driving device (10) may comprise a fixed part. The fixed part may be a part relatively fixed when a moving part moves. The moving part may move relative to the fixed part.

The lens driving device (10) may comprise a base (110). The fixed part may comprise a base (110). The base (110) may be disposed outside of a housing (210). At least a portion of the base (110) may be disposed between the housing (210) and a cover (140). The base (110) may be coupled with the cover (140).

The base (110) may comprise a groove (111). The groove (111) may accommodate at least a portion of AF ball (520). The groove (111) may be an AF ball reception groove. The groove (111) may be disposed at both sides of AF magnet (410). The groove (111) may comprise a plurality of grooves. The groove (111) may comprise two grooves. The said two grooves (111) may take the same shape. Alternatively, the said two grooves (111) may be formed to take a different shape. Any one of the said two grooves (111) may contact AF ball (520) at two points, and the other groove may contact the AF ball (520) at one point. Each of the two said grooves (111) may be disposed with three AF balls (520). The groove (111) may comprise a first groove (111a). The first groove (111a) may contact the AF ball (520) at one point. The first groove (111a) may be a U shaped groove. However, the AF ball (520) may contact the first groove (111a) at two points due to movement of AF ball (520). The groove (111) may comprise a second groove (111b). The second groove (111b) may provide a space narrower than that of the first groove (111a) relative to the AF ball (520), through which the second groove (111b) may contact the AF ball (520) at two points. The second groove (111b) may be a V shaped groove. The first groove (111a) may be disposed at one side of AF magnet (410). The second groove (111b) may be disposed at the other side of AF magnet (410). That is, the AF magnet (410) may be disposed between the first groove (111a) and the second groove (111b).

The base (110) may comprise a dam (112). The dam (112) may be disposed at an upper surface of a lower plate of base (110). The dam (112) may prevent grease coated on the AF ball (520) from overflowing. That is, the dam (112) may accommodate the grease thereinside. The dam (112) may be protrusively formed on an upper surface of a lower plate of base (110). The dam (112) may protrude from the upper surface of lower plate of base

(110). The base (110) may comprise a first protrusion (113). The first protrusion (113) of base (110) may contact a lower stopper (215) of housing (210). The first protrusion (113) of base (110) may protrude from an upper surface of lower plate of base (110). The first protrusion (113) may be spaced apart from the dam (112).

The base (110) may comprise a second protrusion (114). The second protrusion (114) may contact a lower stopper (215) of housing (210). When the housing (210) moves to a lower side of an optical axis direction in the first exemplary embodiment of the present invention, a lower stopper (215) of housing (210) may simultaneously contact the first protrusion (113) and the second protrusion (114) of base (110). However, as a modification, when the housing (210) is moved to a lower side of optical axis direction, the lower stopper (215) of housing (210) may first contact the first protrusion (113) of base (110), and may not contact or later contact the second protrusion (114). Alternatively, as another modification, when the housing (210) is moved to a lower side of optical axis direction, the lower stopper (215) of housing (210) may first contact the second protrusion (114) and may later contact or may not contact the first protrusion (113).

The lens driving device (10) may comprise a substrate (120. The fixed part may comprise a substrate (120). The substrate (120) may be disposed on the base (110). The substrate (120) may comprise an FPCB (flexible printed circuit board). The substrate (120) may be disposed at a lateral surface of base (110). The substrate (120) may comprise a bent portion to wrap a plurality of lateral surfaces of base (110). The substrate (120) may be electrically connected to a PCB (50). The substrate (120) may comprise a terminal part formed with a plurality of terminals. The terminals of substrate (120) may be formed at a lower end of substrate (120), and may be connected to terminals of PCB (50) by a conductive member.

The lens driving device (10) may comprise an attraction member. The lens driving device (10) may comprise a pressure member providing a pressing force to the AF ball (520). The lens driving device (10) may comprise a closing (adhering) member closing (adhering) the AF ball (520) between the base (110) and housing (210). The lens driving device (10) may comprise an attraction member and a closing member separate from the attraction member. The lens driving device (10) may comprise a yoke (130). The attraction member may comprise a yoke (130). The attraction member may comprise a magnetic member. The fixed part may comprise a yoke (130). The yoke (130) may be disposed at an outside of the substrate (120). The yoke (130) may be disposed at an opposite side of AF coil (430) based on the substrate (120). The yoke (130) may be disposed at a position corresponding to that of the AF magnet (410). An attraction force may be applied between the yoke (130) and the AF magnet (410). The yoke (130) may comprise a metal. The AF ball (520) may allow maintaining a state contacted to the base (110) and the housing (210) by the attraction between the yoke (130) and the AF magnet (410).

The lens driving device (10) may comprise a cover (140). The fixed part may comprise a cover (140). The cover (140) may be coupled on the base (110). The cover (140) may be fixed to the base (110). The cover (140) may be accommodated inside the housing (210). The cover (140) may be accommodated inside a lens holder (310). The cover (140) may be a shield member. The cover (140) may be a shield can. The cover (140) may interdict the (EMI. electromagnetic interference). At this time, a cover member (330) may be an EMI shield can.

The cover (140) may comprise an upper plate (141). The upper plate (141) may be disposed on a first moving part. The upper plate (141) may be disposed on a second moving part. The upward movement of the first moving part may be restricted by contact of the first moving part to the upper plate (141). The upper plate (141) may comprise a hole through which a light passes.

The cover (140) may comprise a lateral plate (142). The lateral plate (142) may be extended from the upper plate (141). The lateral plate (142) may be disposed on the base (110). The lateral plate (142) may be disposed on a staircase part protrusively formed from a lower end of an outside of the base (110). The lateral plate (142) may comprise a plurality of lateral plates. The lateral plate (142) may comprise four (4) lateral plates. The lateral plate (142) may comprise a first lateral plate and a second lateral plate each facing the other, and a third lateral plate and a fourth lateral plate each facing the other.

The cover (140) may comprise a hole (143). The hole (143) may be an adhesive infusing hole. An adhesive may be infused into the cover (140) through the adhesive infusing hole. The adhesive may be infused into the cover (140) through the hole (143). The hole (143) may be formed on a lateral plate (142) of cover (140). The hole (143) may be respectively formed on four lateral plates (142). Two holes (143) each may be formed on the four lateral plates (142).

The lens driving device (10) may comprise a moving part. The moving part may be moved to the fixed part by a driving part. The moving part may comprise a first moving part that moves during the AF driving. The first moving part may comprise a first moving part. The moving part may comprise a second moving part that moves during the OIS driving. The second moving part may be moved during both the AF driving and OIS driving. The second moving part may be coupled by a lens. The first moving part may be disposed between the second moving part and the fixed part.

The lens driving device (10) may comprise a first moving part. The first moving part may move during AF driving. The first moving part may be moved by AF driving part. The first moving part may move to an optical axis direction. The first moving part may be disposed on the fixed part. The first moving part may be disposed within the fixed part. The first moving part may be movably disposed within the fixed part to an optical axis direction.

The lens driving device (10) may comprise a housing (210). The first moving part may comprise the housing (210). The housing (210) may be disposed within a base (110). The housing (210) may be disposed at an outside of a lens holder (310). The housing (210) may be disposed between the lens holder (310) and the base (110). The housing (210) may be movably disposed within the base (110) to an optical axis direction. The housing (210) may be moved during AF driving. The housing (210) may not be moved during OIS driving.

The housing (210) may comprise an upper plate (211). The upper plate (211) may be disposed on an upper side of lens holder (310). The upper plate (211) may be disposed with an OIS ball (510). The upper plate (211) may be contacted by the OIS ball (510) at a lower surface. The upper plate (211) may be comprised therein with an attraction member (220). The upper plate (211) may be comprised therein with a metal member (230). The upper plate (211) may comprise a hole through which a light passes.

The housing (210) may comprise a lateral plate (212). The lateral plate (212) may be extended from the upper plate (211). The lateral plate (212) may be disposed with an AF magnet (410). The lateral plate (212) may be formed with a groove accommodated by an AF magnet (410). The lateral plate (212) may comprise a hole formed at a position corresponding to that of an OIS magnet (420).

The housing (210) may comprise an upper stopper (213). The upper stopper (213) may be formed at an upper surface of upper plate (211) of housing (210). The upper stopper (213) may restrict an upward movement of housing (210). The upper stopper (213) may be contacted to an upper plate (141) of cover (140) when the housing (210) is moved upwards of optical axis direction. The upper stopper (213) may comprise a plurality of protrusions. The upper stopper (213) may comprise four (4) protrusions. The upper stopper (213) may be respectively formed on four corner areas of an upper surface of housing (210).

The housing (210) may comprise a groove (214). The groove (214) may accommodate at least a portion of AF ball (520). The groove (214) may be an AF ball reception groove. The groove (214) may be disposed on both sides of AF magnet (410). The groove (214) may comprise a plurality of grooves. The groove (214) may comprise two grooves. Each of the said two grooves (214) may be formed with the same shape. Alternatively, each of the said two grooves may be formed with a mutually different shape. Any one of the two grooves (214) may be contacted to the AF ball (520) at two points, and the other groove may be contacted to the AF ball (520) at one point. Each of two grooves may be disposed with three (3) AF balls (520).

The housing (210) may comprise a lower stopper (215). The lower stopper (215) may be formed at a lower end of the lateral plate (212) of housing (210). The lower stopper (215) may restrict a downward movement of the housing (210). The lower stopper (215) may contact a lower plate of base (110) when the housing (210) moves downwards of the optical axis direction. The lower stopper (215) may comprise a plurality of stoppers. The lower stopper (215) may comprise four (4) stoppers. The lower stopper (215) may be respectively formed at four (4) corner areas of housing (210). Meantime, only a portion of the plurality of lower stoppers (215) may be so formed as to first contact the base (110).

The lens driving device (10) may comprise an attraction member (220). The first moving part may comprise the attraction member (220). The attraction member (220) may comprise a yoke. The attraction member (220) may comprise a magnetic body. The attraction member (220) may comprise a magnetic member. The attraction member (220) may be disposed on the housing (210). The attraction member (220) may be disposed on an upper plate (211) of housing (210). The attraction member (220) may be disposed inside of housing (210). The attraction member (220) may be housed within the housing (210). That is, the attraction member (220) may be so disposed as not to be visible from an exterior surface of housing (210). The attraction member (220) may be inserted into the housing (210). The attraction member (220) may apply an attraction on the OIS magnet (420). The attraction member (220) may comprise a metal. The attraction member (220) may possess magnetism. Alternatively, the attraction member (220) may be a metal having no magnetism. The attraction member (220) may be disposed on a position corresponding to that of OIS magnet (420). The attraction member (220) may be overlapped with the OIS magnet (420) to an optical axis direction. The attraction member (220) may be disposed on the OIS magnet (420). The attraction member (220) may upwardly pull the OIS magnet (420). The OIS ball (510) may maintain a state of being contacted between the upper plate (211) of housing (210) and the lens holder (310) by the attraction force (gravity) between the attraction member (220) and the OIS magnet (420).

The lens driving device (10) may comprise a metal member (230). The first moving part may comprise a metal member (230). The metal member (230) may be disposed on the housing (210). At least a portion of the metal member (230) may be housed within the housing (210). Only a portion of the metal member (230) may be seen from an exterior surface of housing (210). The metal member (230) may be disposed with an OIS ball (510). The metal member (230) may be contacted by the OIS ball (510). The flatness of rolling surface of OIS ball (510) may be easily managed by the metal member (230). Furthermore, the dent phenomenon caused on the OIS ball (510) and/or housing (210) by shock may be prevented by the metal member (230).

The metal member (230, 330) in the first exemplary embodiment of the present invention may be disposed on at least one of the housing (210) and the lens holder (310). At this time the OIS ball (510) may be so disposed as to roll along the metal member (230, 330). The OIS ball (510) may contact the surface of metal member (230, 330). However, when grease is coated on the OIS ball (510), the grease may be disposed between the OIS ball (510) and the metal member (230, 330).

The lens driving device (10) may include a retainer (240). The first moving part may include a retainer (240). The retainer (240) may be an AF stopper. The retainer (240) may be a stopper. The retainer (240) may be coupled to housing (210). The retainer (240) may be coupled below housing (210). The retainer (240) may be hook-coupled to the housing (210). The retainer (240) may be fixed to housing (210). The retainer (240) may be disposed in housing (210). The retainer (240) may be disposed below the lens holder (310). The retainer (240) may be disposed between the lens holder (310) and the base (110) in an optical axis direction. The retainer (240) may be disposed between the lens holder (310) and the base (110).

The retainer (240) can prevent the lens holder (310) from falling down phenomenon due to impact. The retainer (240) can prevent the elastic member (530) from being deformed. In the present embodiment, the deformation of the elastic member (530) can be managed below the yield stress through the retainer (240). The retainer (240) may limit the downward movement distance of the lens holder (310).

As illustrated in FIG. 20d, the lens holder (310) and the retainer (240) may be spaced apart by a first distance (refer to a in FIG. 20d) in an optical axis direction. Accordingly, the lens holder (310) can only move downward within the first separation distance even when an external impact is applied. That is, when the lens holder (310) moves downward as much as possible, it may come into contact with the retainer (240). Through this structure, excessive deformation of the elastic member (530) coupled to the lens holder (310) can be prevented. In other words, the deformation of the elastic member (530) can be managed as a deformation below the yield stress.

In a comparative example illustrated in FIG. 20e, the retainer (240) may be omitted. In this case, the lens holder (310) may be in contact with the base (110) when it moves downward due to an external impact (refer to b in FIG. 20e). The lens holder (310) may be spaced apart from the base (110) at a second distance greater than the first distance (refer to a in FIG. 20d) in an optical axis direction. Accordingly, in a comparative example, the lens holder (310) can be moved downward further and the elastic member (530) can be deformed further. At this time, if the deformation of the elastic member (530) exceeds the yield stress, the elastic member (530) may not be restored to its original state.

The lens driving device (10) may comprise a second moving part. The second moving part may move during OIS driving. The second moving part may be moved by an OIS driving part. The second moving part may be moved to a direction perpendicular to an optical axis. The second moving part may be dispose on the first moving part. The second moving part may be disposed within the first moving part. The second moving part may be disposed within the fixed part. The second moving part may be movably disposed within the first moving part to a direction to a direction perpendicular to an optical axis. The second moving part may be disposed within a fixed part to a direction perpendicular to an optical axis.

The lens driving device (10) may comprise a lens holder (310). The second moving part may comprise a lens holder (310). The lens holder (310) may be disposed within a housing (210). The lens holder (310) may be disposed on the housing (210). The lens holder (310) may be disposed within a base (110). The lens holder (310) may be disposed within a cover (140). The lens holder (310) may be movably disposed to a direction perpendicular to an optical axis. The lens holder (310) may be movably disposed within a housing (210) to a direction perpendicular to an optical axis. The lens holder (310) may be movably disposed within a base (110) to a direction perpendicular to an optical axis. The lens holder (310) may be movably disposed within a cover (140) to a direction perpendicular to an optical axis.

The lens holder (310) may comprise a support part (311). The support part (311) may be disposed between an OIS ball (510) and an elastic member (530) to an optical axis direction. The support part (311) may be formed with a shorter length than other portions of lens holder (310) to an optical axis direction. It may be understood that an upper side of support part (311) at the lens holder (310) is formed with a groove for placing an OIS ball (510). The support part (311) may support an OIS ball (510). The support part (311) may be disposed with an OIS ball (510). The support part (311) may be disposed with a metal member (330). The support part (311) may be a corner area of lens holder (310). It should be understood that the support part (311) is a part of the lens holder (310) as a portion to support an OIS ball (510).

The lens holder (310) may comprise a lateral stopper (312). The lateral stopper (312) may be disposed on a lateral surface of lens holder (310). The lateral stopper (312) may be protruded from a lateral surface of lens holder (310). The lateral stopper (312) may restrict a lateral movement of lens holder (310). The lateral stopper (312) may contact the housing (210) when the lens holder (310) is moved to a direction perpendicular to an optical axis. The lateral stopper (312) may comprise a plurality of protrusions. The lateral stopper (312) may comprise an x axis direction stopper and a y axis direction stopper.

The lens driving device (10) may comprise a metal member (330). The second moving part may comprise a metal member (330). The metal member (330) may be disposed on a lens holder (310). The metal member (330) may face a metal member (230). At least a portion of the metal member (330) may be disposed within the lens holder (310). Only a part of the metal member (330) may be seen from an external surface of the lens holder (310). The metal member (330) may be disposed on an OIS ball (510). The metal member (330) may be contacted by the OIS ball (510). The flatness of a rolling surface of OIS ball (510) may be easily managed by the metal member (330). Furthermore, a dent phenomenon caused on the OIS ball (510) and/or lens holder (310) by shock may be prevented by the metal member (330).

The lens driving device (10) may comprise a driving part. The driving part may move a moving part. The driving part may move the moving part relative to the fixed part. The driving part may comprise a first driving part for moving the first moving part. The first driving part may comprise an AF driving part. The driving part may comprise a second driving part for moving a second moving part. The second driving part may comprise an OIS driving part. The driving part may comprise a coil and a magnet.

The first driving part may comprise an AF coil (430) and an AF magnet (410). The second driving part may comprise an OIS coil (440) and an OIS magnet (420). The first driving part may move the first moving part to an optical axis direction. The second driving part may move the second moving part to a direction perpendicular to an optical axis. A lens may move the first moving part and the second moving part together.

The lens driving device (10) may comprise an AF magnet (410). The driving part may comprise an AF magnet (410). The AF magnet (410) may be disposed on the housing (210). The AF magnet (410) may be disposed at a lateral plate (212) of housing (210). The AF magnet (410) may be fixed to the housing (210). The AF magnet (410) may be coupled to the housing (210). The AF magnet (410) may be attached to the housing (210) using an adhesive. The AF magnet (410) may be disposed within the cover (140). The AF magnet (410) may interact with the AF coil (430). The AF magnet (410) may electromagnetically interact with the AF coil (430). The AF magnet (410) may be disposed on a position corresponding to that of AF coil (430). The AF magnet (410) may face the AF coil (430). The AF magnet (410) may face the AF coil (430). The AF magnet (410) may be overlapped with the AF coil (430) to a direction perpendicular to an optical axis.

The AF magnet (410) may be a four-pole magnet. The AF magnet (410) may be a four-pole magnetized magnet. An upper surface of AF magnet (410) may comprise an N pole and an S pole, and a lower surface of AF magnet (410) may comprise an S pole and an N pole, a center of AF magnet (410) may be a neutral zone. To be more specific, an outer surface of the upper surface of AF magnet (410) may be an N pole and an inner surface of the upper surface may be an S pole. An outer surface of a lower surface of AF magnet (410) may be an S pole, and an inner surface of the lower surface may be an N pole. An upper surface and a lower surface of AF magnet (410) may be mutually spaced apart by a neutral zone. The AF magnet (410) may be formed by vertically stacking up two single magnets.

The lens driving device (10) may comprise a yoke (415). The driving part may comprise a yoke (415). The yoke (415) may be disposed on the housing (210). The yoke (415) may be disposed between the AF magnet (410) and the housing (210). The yoke (415) may concentrate the magnetic force of AF magnet (410) to a direction facing the AF coil (430). That is, the yoke (415) may minimize leakage of magnetic force of AF magnet (410) to an opposite direction of AF coil (430).

The lens driving device (10) may comprise an OIS magnet (420). The driving part may comprise an OIS magnet (420). The OIS magnet (420) may be dispose on the lens holder (310). The OIS magnet (420) may be disposed at a lateral surface of lens holder (310). The OIS magnet (420) may be disposed on a groove of lens holder (310). The OIS magnet (420) may be fixed to the lens holder (310). The OIS magnet (420) may be coupled to the lens holder (310). The OIS magnet (420) may be attached to the lens holder (310) using an adhesive. The OIS magnet (420) may be disposed inside the housing (210). The OIS magnet (420) may be disposed inside of the cover (140). The OIS magnet (420) may interact with the OIS coil (440). The OIS magnet (420) may electromagnetically interact with the OIS coil (440). The OIS magnet (420) may be disposed on a position corresponding to that of the OIS coil (440). The OIS magnet (420) may face the OIS coil (440). The OIS magnet (420) may face the OIS coil (440). The OIS magnet (420) may be overlapped with the OIS coil (440) to a direction perpendicular to an optical axis.

The OIS magnet (420) may be a two-pole magnet. The OIS magnet (420) may be a two-pole magnetized magnet. The OIS magnet (420) may comprise an N pole and an S pole. For example, the OIS magnet (420) may be an N pole whose outer surface faces the OIS coil (440), and an inner surface which is an opposite surface may be an S pole. Conversely, an outer surface of OIS magnet (420) may be an S pole and an inner surface may be an N pole.

The lens driving device (10) may comprise an OIS-x magnet (421). The driving part may comprise an OIS-x magnet (421). The OIS magnet (420) may comprise an OIS-x magnet (421). The OIS-x magnet (421) may be disposed on the lens holder (310). The OIS-x magnet (421) may be disposed on a first lateral surface of lens holder (310). The OIS-x magnet (421) may be disposed to a direction less the AF magnet (410). The OIS-x magnet (421) may be disposed perpendicularly to a placement direction of AF magnet (410). The OIS-x magnet (421) may interact with the OIS-x coil (441). The OIS-x magnet (421) may electromagnetically interact with the OIS-x coil (441). The OIS-x magnet (421) may be disposed on a position corresponding to that of the OIS-x coil (441). The OIS-x magnet (421) may face the OIS-x coil (441). The OIS-x magnet (421) may face the OIS-x coil (441). The OIS-x magnet (421) may be overlapped with the OIS-x coil (441) to a direction perpendicular to an optical axis.

The lens driving device (10) may comprise an OIS-y magnet (422). The driving part may comprise an OIS-y magnet (422). The OIS magnet (420) may comprise an OIS-y magnet (422). The OIS-y magnet (422) may be disposed on a position perpendicular to a placement direction of OIS-x magnet (421). The OIS-y magnet (422) may be disposed on the lens holder (310). The OIS-y magnet (422) may be disposed on a second lateral surface adjacent to the first lateral surface of the lens holder (310). The OIS-y magnet (422) may be disposed on a direction less the AF magnet (410). The OIS-y magnet (422) may be disposed parallel with the placement direction of AF magnet (410). The OIS-y magnet (422) may interact with the OIS-y coil (442). The OIS-y magnet (422) may electromagnetically interact with the OIS-y coil (442). The OIS-y magnet (422) may be disposed on a position corresponding to that of the OIS-y coil (442). The OIS-y magnet (422) may face the OIS-y coil (442). The OIS-y magnet (422) may face the OIS-y coil (442). The OIS-y magnet (422) may be overlapped with the OIS-y coil (442) to a direction perpendicular to an optical axis.

The lens driving device (10) may comprise a yoke (425). The driving part may comprise a yoke (425). The yoke (425) may be disposed inside of the lens holder (310). The yoke (425) may be disposed between the lens holder (310) and the OIS magnet (420). The yoke (415) may concentrate the magnetic force of OIS magnet (420) to a direction facing the OIS coil (440). That is, the yoke (415) may minimize leakage of magnetic force of OIS magnet (420) to an opposite direction of OIS coil (440).

The lens driving device (10) may comprise an AF coil (430). The driving part may comprise an AF coil (430). The AF coil (430) may interact with the AF magnet (410). The AF coil (430) may move the AF magnet (410) to an optical axis. The AF coil (430) may move the AF magnet to an optical axis direction through interaction with the AF magnet (410). The AF coil (430) may face the AF magnet (410). The AF coil (430) may face the AF magnet (410). The AF coil (430) may be positioned on a position corresponding to that of the AF magnet (410). The AF coil (430) may be overlapped with the AF magnet (410) to a direction perpendicular to an optical axis. The AF coil (430) may be disposed on a substrate (120). The AF coil (430) may be disposed on the base (110). The AF coil (430) may be disposed on a fixed part.

The lens driving device (10) may comprise an OIS coil (440). The driving part may comprise an OIS coil (440). The OIS coil (440) may interact with the OIS magnet (420). The OIS coil (440) may move the OIS magnet (420) to a direction perpendicular to an optical axis. The OIS coil (440) may move the OIS magnet (420) to a direction perpendicular to an optical axis through interaction with the OIS magnet (420). The OIS coil (440) may face the OIS magnet (420). The OIS coil (440) may face the OIS magnet (420). The OIS coil (440) may be disposed on a position corresponding to that of the OIS magnet (420). The OIS coil (440) may be overlapped with the OIS magnet (420) to a direction perpendicular to an optical axis. The OIS coil (440) may be disposed on a substrate (120). The OIS coil (440) may be disposed on the base (110). The OIS coil (440) may be disposed on the fixed part.

The lens driving device (10) may comprise an OIS-x coil (441). The driving part may comprise an OIS-x coil (441). The OIS coil (440) may comprise an OIS-x coil (441). The OIS-x coil (441) may interact with the OIS-x magnet (421). The OIS-x coil (441) may move the OIS-x magnet (421) to an x axis direction. The OIS-x coil (441) may move the OIS-x magnet (421) to an x axis direction through interaction with the OIS-x magnet (421). The OIS-x coil (441) may face the OIS-x magnet (421). The OIS-x coil (441) may face the OIS-x magnet (421). The OIS-x coil (441) may be disposed on a position corresponding to that of the OIS-x magnet (421). The OIS-x coil (441) may be overlapped with the OIS-x magnet (421) to an x axis direction. The OIS-x coil (441) may be disposed on the substrate (120). The OIS-x coil (441) may be disposed on the base (110). The OIS-x coil (441) may be disposed on the fixed part.

The lens driving device (10) may comprise an OIS-y coil (442). The driving part may comprise an OIS-y coil (442). The OIS coil (440) may comprise an OIS-y coil (442). The OIS-y coil (442) may be disposed on a position perpendicular to a placement direction of OIS-x coil (441). The OIS-y coil (442) may interact with the OIS-y magnet (422). The OIS-y coil (442) may move the OIS-y magnet (422) to y axis direction. The OIS-y coil (442) may move the OIS-y magnet (422) to y axis direction through interaction with OIS-y magnet (422). The OIS-y coil (442) may face the OIS-y magnet (422). The OIS-y coil (442) may face the OIS-y magnet (422). The OIS-y coil (442) may be disposed on a position corresponding to that of the OIS-y magnet (422). The OIS-y coil (442) may be overlapped with the OIS-y magnet (422) to y axis direction. The OIS-y coil (442) may be disposed on the substrate (120). The OIS-y coil (442) may be disposed on a base (110). The OIS-y coil (442) may be disposed on the fixed part.

The lens driving device (10) may comprise an AF sensor (450). The driving part may comprise an AF sensor (450). The AF sensor (450) may comprise a Hall sensor. The AF sensor (450) may detect the magnetic force of the AF magnet (410). The AF sensor (450) may be so disposed as to face the AF magnet (410). The AF sensor (450) may face the AF magnet (410). The AF sensor (450) may be disposed at a position corresponding to that of the AF magnet (410). The AF sensor (450) may be disposed on the substrate (120). The AF sensor (450) may be disposed on the (110). The AF sensor (450) may be disposed on the fixed part. The AF sensor (450) may be disposed on a lateral plate (142) of the cover (140). The AF sensor (450) may be disposed within the AF coil (430). The AF sensor (450) may detect the movement or position to an optical axis direction of lens. A sensed value detected by the AF sensor (450) may be used for auto focus feedback control.

The lens driving device (10) may comprise an OIS sensor (460). The driving part may comprise an OIS sensor (460). The OIS sensor (460) may comprise a Hall sensor. The OIS sensor (460) may detect the magnetic force of OIS magnet (420). The OIS sensor (460) may be so disposed as to face the OIS magnet (420). The OIS sensor (460) may face the OIS magnet (420). The OIS sensor (460) may be disposed at a position corresponding to that of the OIS magnet (420). The OIS sensor (460) may be disposed on the substrate (120). The OIS sensor (460) may be disposed on the base (110). The OIS sensor (460) may be disposed on the fixed part. The OIS sensor (460) may be disposed on a lateral plate (142) of cover (140). The OIS sensor (460) may be disposed within the OIS coil (440). The OIS sensor (460) may detect the movement or position to a direction perpendicular to an optical axis of lens. A sensed value detected by the OIS sensor (460) may be used for OIS feedback control.

The lens driving device (10) may comprise an OIS-x sensor (461). The driving part may comprise an OIS-x sensor (461). The OIS sensor (460) may comprise an OIS-x sensor (461). The OIS-x sensor (461) may comprise a Hall sensor. The OIS-x sensor (461) may detect the magnetic force of OIS-x magnet (421). The OIS-x sensor (461) may be so disposed as to face the OIS-x magnet (421). The OIS-x sensor (461) may face the OIS-x magnet (421). The OIS-x sensor (461) may be disposed on a position corresponding to that of the OIS-x magnet (421). The OIS-x sensor (461) may be disposed on the substrate (120). The OIS-x sensor (461) may be disposed on the base (110). The OIS-x sensor (461) may be disposed on the fixed part. The OIS-x sensor (461) may be disposed on a lateral plate (142) of cover (140). The OIS-x sensor (461) may be disposed within the OIS-x coil (441). The OIS-x sensor (461) may detect the movement or position of lens to an x axis direction. A sensed value detected by the OIS-x sensor (461) may be used for OIS feedback control.

The lens driving device (10) may comprise an OIS-y sensor (462). The driving part may comprise an OIS-y sensor (462). The OIS sensor (460) may comprise an OIS-y sensor (462). The OIS-y sensor (462) may comprise a Hall sensor. The OIS-y sensor (462) may detect a magnetic force of OIS-y magnet (422). The OIS-y sensor (462) may be so disposed as to face the OIS-y magnet (422). The OIS-y sensor (462) may fact the OIS-y magnet (422). The OIS-y sensor (462) may be disposed on a position corresponding to that of the OIS-y magnet (422). The OIS-y sensor (462) may be disposed on the substrate (120). The OIS-y sensor (462) may be disposed on the base (110). The OIS-y sensor (462) may be disposed on the fixed part. The OIS-y sensor (462) may be disposed on a lateral plate (142) of cover (140). The OIS-y sensor (462) may be disposed within the OIS-y coil (442). The OIS-y sensor (462) may detect the movement or position of lens to the y axis direction. A sensed value detected by the OIS-y sensor (462) may be used for OIS feedback control.

The lens driving device (10) may comprise a guide part. The guide part may guide the movement of driving part. The guide part may comprise a first guide part to an optical axis direction (z axis direction), a second guide part to a first direction (x axis direction) perpendicular to an optical axis, and a third guide part to a second direction (y axis direction) perpendicular to both the optical axis and the first direction.

The lens driving device (10) may comprise a ball. The guide part may comprise a ball. The ball may take a spherical shape. The ball may roll and move on a surface contacted by the ball. The ball may be disposed between the fixed part and the moving part. The ball may be disposed between the fixed part and the first moving part. The ball may be disposed between the first moving part and the second moving part.

The lens driving device (10) may comprise an OIS ball (510). The guide part may comprise the OIS ball (510). The OIS ball (510) may be disposed between the housing (210) and the lens holder (310). The OIS ball (510) may be disposed on an opposite side of elastic member (530) relative to the lens holder (310). The OIS ball (510) may be disposed on an upper surface of lens holder (310). The OIS ball (510) may be overlapped with the connection part (533) to an optical axis direction. The OIS ball (510) may be disposed between an upper plate (211) of housing (210) and the lens holder (310). The OIS ball (510) may be so disposed as to be contacted to any one or more of the metal member (230) of first moving part and the metal member (330) of second moving part.

At this time, while a surface of OIS ball (510) is coated with other substances than grease, and even when other substances except for the OIS ball (510) are contacted by other substances such as grease and the like, it is assumed to comprise that OIS ball (510) is contacted. The OIS ball (510) may be formed with a metal. Alternatively, the OIS ball OIS ball (510) may be formed with injection.

When the lens holder (310) is moved, the OIS ball (510) may be guided to move to a direction perpendicular to an optical axis relative to the housing (210). The OIS ball (510) may be contacted to the lens holder (310) and the housing (210). The OIS ball (510) may connect the lens holder (310) and the housing (210). The OIS ball (510) may guide the movement of lens holder (310) to an x axis direction. The OIS ball (510) may guide the movement of lens holder (310) to a y axis direction. The OIS ball (510) may guide the movement of lens holder (310) to both the x axis and y axis directions. That is, the OIS ball (510) may be formed with all-in-one type using a single ball without dividing x ball and y ball. There may be generated a problem of crosstalk where x axis driving force and y axis driving force are affected due to allowing the OIS ball (510) to be formed with all-in-one type, the crosstalk can be minimized through an elastic member (530) according to a first exemplary embodiment of the present invention. The OIS ball (510) may be disposed between the housing (210) and the lens holder (310) to an optical axis direction. The OIS ball (510) may be supported to an upper plate of housing (210), and may be downwardly pressed from the lens holder (310), through which the OIS ball (510) may maintain a contacted state with the upper plate of housing (210) and the lens holder (310). The OIS ball (510) may be coated with grease.

The OIS ball (510) may be disposed on an upper surface of lens holder (310). The OIS ball (510) may be disposed on the lens holder (310). The OIS ball (510) may be disposed on a corner area of upper surface of lens holder (310). The OIS ball (510) may be respectively disposed on four (4) corner areas of upper surface of lens holder (310). The OIS ball (510) may be disposed on an opposite side of the lens holder (310). The OIS ball (510) may be disposed on an opposite side of an image sensor (60) relative to the lens holder (310).

The OIS ball (510) may comprise a plurality of balls. The plurality of balls may be disposed on an imaginary plane perpendicular to an optical axis. The plurality of balls may comprise four (4) balls. The said four balls may be correspondingly disposed on the four corner areas of upper surface of lens holder (310).

The lens driving device (10) may comprise an AF ball (520). The guide part may comprise an AF ball (520). The AF ball (520) may be disposed between the base (110) and the housing (210). The AF ball (520) may be overlapped with the upper plate (141) of the cover (140) in an optical axis direction. Through this, a phenomenon in which the AF ball (520) is separated in an optical axis direction can be prevented by being blocked by the upper plate (141) of the cover (140). The AF ball (520) may be disposed to a direction perpendicular to an optical axis between the base (110) and the housing (210). The AF ball (520) may contact the base (110) and the housing (210). The AF ball (520) may connect the base (110) and the housing (210). The AF ball (520) may guide the movement of housing (210) to an optical axis direction (z axis direction) relative to the base (110). The AF ball (520) may be supported by the base (110), and pressed thereinto from the housing (210), through which the AF ball (520) may maintain a contacted state with the base (110) and the housing (210). The AF ball (520) may be coated with grease. The AF ball (520) may be formed with a metal, or may be formed with an injection.

The AF ball (520) may comprise a plurality of balls. The plurality of balls may be disposed on an imaginary plane parallel with an optical axis. The AF ball (520) may be so disposed as to be divided onto both sides of AF magnet (410). For example, three AF balls (520) may be disposed on one side of AF magnet (410), and three AF balls (520) may be disposed on the other side of AF magnet (410). The AF ball (520) may comprise first to third ball overlapped to an optical axis direction. The second ball may be disposed between the first ball and third ball. At this time, a diameter of second ball may be smaller than that of the first ball and the third ball.

The lens driving device (10) may comprise an elastic member (530). The guide part may comprise an elastic member (530). The elastic member (530) may connect the housing (210) and the lens holder (310). The elastic member (530) may connect a lower surface of housing (210) and a lower surface of lens holder (310). The elastic member (530) may be coupled to the housing (210) and the lens holder (310). The elastic member (530) may be coupled o a lower side of housing (210) and a lower side of lens holder (310). The elastic member (530) may be disposed on a lower surface of housing (210) and a lower surface of lens holder (310). The elastic member (530) may be disposed parallel with a direction perpendicular to an optical axis. The elastic member (530) may be coupled to a lower surface of lens holder (310). At this time, the lower surface of lens holder (310) may be a surface facing the image sensor (60). The elastic member (530) may be disposed between the housing (210) and a retainer (240). The elastic member (530) may connect the housing (210) disposed with the AF magnet (410) and the lens holder (310) disposed with the OIS magnet (420).

The elastic member (530) may possess the elasticity. The elastic member (530) may be electrically conductive. The elastic member (530) may comprise a metal. The elastic member (530) may comprise a spring. The elastic member (530) may comprise a leaf spring.

The elastic member (530) may comprise an outer part (531). The outer part (531) may be coupled to the housing (210). The outer part (531) may be coupled to a lower surface of housing (210). The outer part (531) may be disposed on the housing (210). The outer part (531) may be disposed on a lower surface of housing (210). The outer part (531) may be formed on a lower surface of housing (210). The (531) may be fixed to the housing (210). The outer part (531) may be fixed to a lower surface of housing (210). The outer part (531) may be fixed to a lower end of the housing (210).

The elastic member (530) may comprise an inner part (532). The inner part (532) may be coupled to the lens holder (310). The inner part (532) may be coupled to a lower surface of lens holder (310). The (532) may be coupled to a lower end of lens holder (310). The inner part (532) may be disposed on the lens holder (310). The inner part (532) may be disposed on a lower end of lens holder (310). The inner part (532) may be disposed on a lower surface of lens holder (310). The inner part (532) may be fixed to the lens holder (310). The inner part (532) may be fixed to a lower surface of lens holder (310). The inner part (532) may be fixed to a lower end of lens holder (310). The inner part (532) may move relative to the outer part (531).

The elastic member (530) may comprise a connecting part (533). The connecting part (533) may connect the outer part (531) and the inner part (532). The connecting part (533) may have the elasticity. The connecting part (533) may be a leg part. The connecting part (533) may elastically connect the outer part (531) and the inner part (532). The connecting part (533) may movably connect the outer part (531) and the inner part (532). The connecting part (533) may be overlapped with the OIS ball (510) to an optical axis direction. The connecting part (533) may be disposed on an opposite side of OIS ball (510) based on the lens holder (310).

Now, the driving of lens driving device according to a first exemplary embodiment of the present invention will be described with reference to the accompanying drawings.

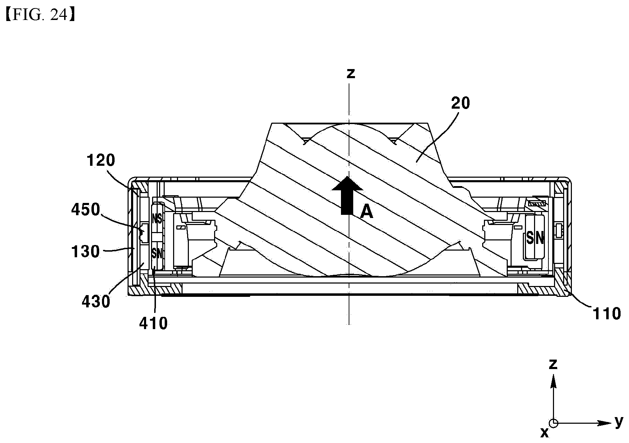

First, the auto focus function will be described with reference to FIGS. 23 and 24.

FIGS. 23 and 24 are schematic views for explaining the auto focus driving of a lens driving device according to a first exemplary embodiment of the present invention.

A first moving part may be disposed on an upper surface of lower plate of base (110) at an initial position where no current is applied to the AF coil (430). When a current is applied onto the AF coil (430), the AF magnet (410) may move to an upper side along an optical axis by the electromagnetic interaction between the AF coil (430) and the AF magnet (410) (see FIG. 24 A). At this time, the second moving part, the first moving part and the lens may move along with the AF magnet (410). As a result, a distance between the lens and image sensor is changed to allow a focus of an image captured on the image sensor to be adjusted through the lens.

Meantime, the AF sensor, in the course of moving the AF magnet (410), may detect the intensity of magnetic field of AF magnet (410) to detect the movement or position of the AF magnet (410). The movement or position of the AF magnet (410) detected by the AF sensor (450) may be used for auto focus feedback control.

In another example, the first moving part, at an initial position where no current is applied to the AF coil (430), may be disposed on a position spaced apart from the base (110). At this time, when a current of reverse direction is applied to the AF coil (430), the first moving part may be downwardly moved toward a lower plate of base (110), Conversely, when a current of forward direction is applied to the AF coil (430), the first moving part may upwardly move toward the upper plate (141) of cover (140). Even in this case, the lens may move along with the first moving part and the second moving part to adjust a distance between the lens and the image sensor.

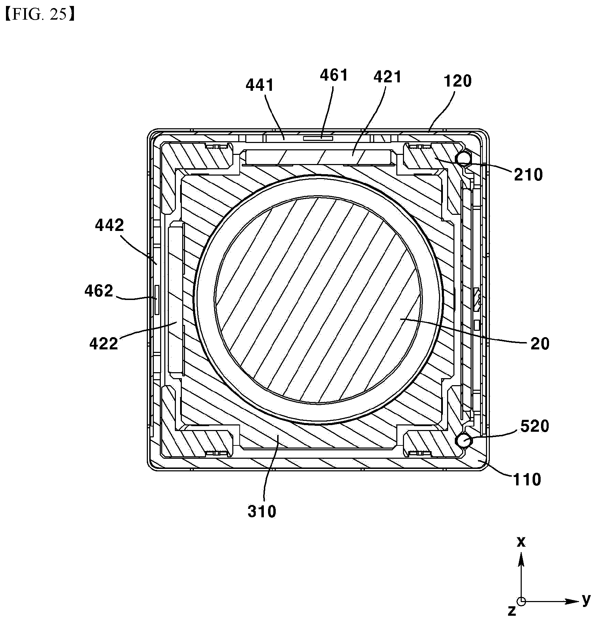

Next, the OIS function will be described with reference to FIGS. 25 to 27.

FIGS. 25 to 27 are schematic views for explaining the OIS driving of a lens driving device according to a first exemplary embodiment of the present invention.

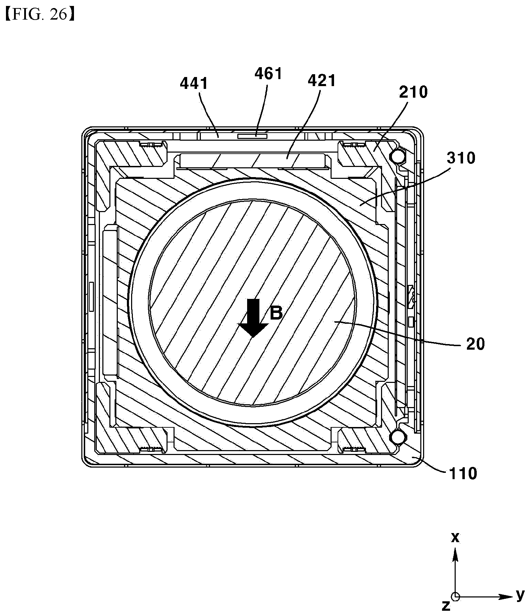

The second moving part, at an initial position where no current is applied to the OIS coil (440), may be disposed to be spaced apart from the first moving part. At this time, when a forward current is applied to the OIS-x coil (441), the OIS-x magnet (421) may move to a direction distancing from the OIS x coil (441) on an x axis direction by the electromagnetic interaction between the OIS-x coil (441) and the OIS-x magnet (421) (see FIG.26 B). Conversely, when a reverse current is applied to the OIS-x coil (441), the OIS-x magnet (421) may move to a direction nearing to the OIS x coil (441) on an x axis direction by the electromagnetic interaction between the OIS-x coil (441) and the OIS-x magnet (421).

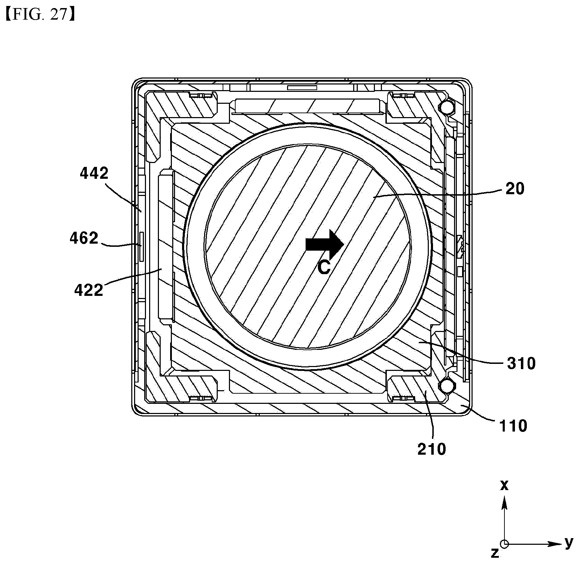

Meantime, when a forward current is applied to the OIS-y coil (442), the OIS-y magnet (422) may move to a direction distancing from the OIS-y coil (442) on a y axis direction by the electromagnetic interaction between the OIS-y coil (442) and the OIS-y magnet (422) (see FIG. 27 C). Conversely, when a reverse current is applied to the OIS-y coil (442), the OIS-y magnet (422) may move to a direction nearing to the OIS-y coil (442) on ay axis direction by the electromagnetic interaction between the OIS-y coil (442) and the OIS-y magnet (422).

In the course of moving of the OIS magnet (420), the OIS sensor (460) may detect the intensity of magnetic field of OIS magnet (420) to detect the movement and position of the OIS magnet (420). The movement and position of the OIS magnet detected by the OIS sensor (460) may be used for OIS feedback control.

Hereinafter, a camera device will be described with reference to the drawings according to a first exemplary embodiment of the present invention.

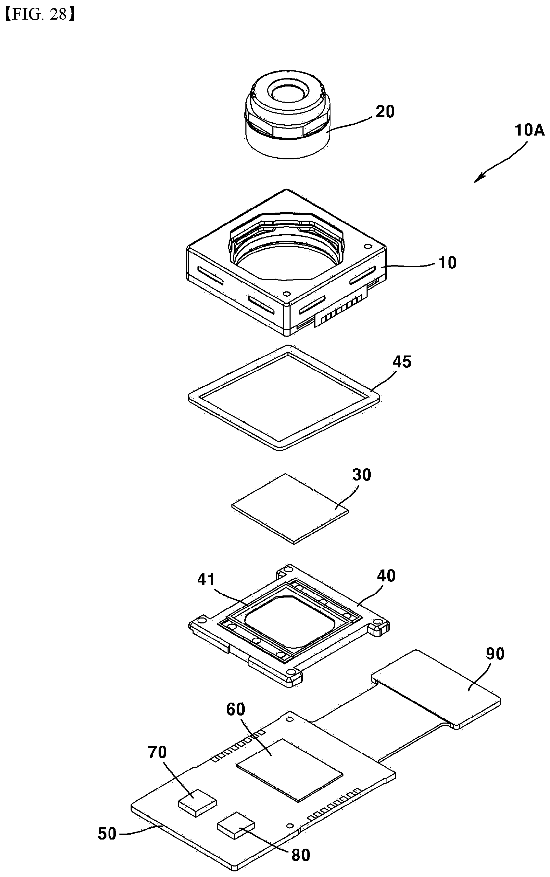

FIG. 28 is an exploded perspective view of a camera device according to a first exemplary embodiment of the present invention.

A camera device (10A) may comprise a camera module.

The camera device (10A) may comprise a lens module (20). The lens module (20) may comprise at least one lens. The lens may be disposed on a position corresponding to that of the image sensor (60). The lens module (20) may comprise a lens and a barrel. The lens module (20) may be coupled to the lens holder (310) of lens driving device (10). The lens module (20) may be coupled to the lens holder (310) by screw-connection and/or adhesive. The lens module (20) may integrally move along with the lens holder (310).

The camera device (10A) may comprise a filter (30). The filter (30) may function to prevent a light of a particular frequency band in the light passing through the lens module (20) from being incident onto the image sensor (60). The filter (30) may be disposed to be parallel with an x-y plane. The filter (30) may be disposed between the lens module (20) and the image sensor (60). The filter (30) may be disposed on a sensor base (40). As a modification, the filter (30) may be disposed on the base (110). The filter (30) may comprise an infrared filter. The infrared filter may prevent a light of infrared region from being incident on the image sensor (60).

The camera device (10A) may comprise a sensor base (40). The sensor base (40) may be disposed between the lens driving device (10) and a PCB (50). The sensor base (40) may comprise a protrusion (41) disposed with the filter (30). A portion of sensor base (40) disposed with the filter (30) may be disposed with an opening to allow the filter (30)-passed light to be incident on the image sensor (60). An adhesive member (45) may couple or attach the base (310) of lens driving device (10) to the sensor base (40). The adhesive member (45) may additionally function to prevent foreign objects from being introduced into the lens driving device (10). The adhesive member (45) may comprise one or more of epoxy, thermosetting adhesive, and UV curable adhesive.

The camera device (10A) may comprise a PCB (Printed Circuit Board, 50). The PCB (50) may be a substrate or a circuit board. The PCB (50) may be disposed with a lens driving device (10). The sensor base (40) may be disposed between the PCB (50) and the lens driving device (10). The PCB (50) may be electrically connected to the lens driving device (10). The PCB (50) may be disposed with an image sensor (60). The PCB (50) may be also disposed with various circuits, elements, controller and the like to convert an image captured on the image sensor (60) to an electric signal and to transmit the electric signal to an outside.

The camera device (10A) may comprise an image sensor (60). The image sensor (60) may be a configuration where an image is captured while allowing a light having passed the lens and the filter (30) to be incident. The image sensor (60) may be mounted on the PCB (50). The image sensor (60) may be electrically connected to the PCB (50). For example, the image sensor (60) may be coupled to the PCB (50) using the SMT (Surface Mounting Technology). For another example, the image sensor (60) may be coupled to the PCB (50) using the flip chip technology. The image sensor (60) may be so disposed as to allow an optical axis to be aligned with the lens. That is, an optical axis of image sensor (60) and an optical axis of lens may be aligned. The image sensor (60) may convert a light irradiated on an effective image region of image sensor (60) to an electric signal. The image sensor (60) may be any one of a CCD (charge coupled device), an MOS (metal oxide semi-conductor), a CPD and a CID.

The camera device (10A) may comprise a motion sensor (70). The motion sensor (70) may be mounted on a PCB (50). The motion sensor (70) may electrically connect to a controller (80) through a circuit pattern provided to the PCB (50). The motion sensor (70) may output rotational angular velocity information caused by the movement of camera device (10A). The motion sensor (70) may comprise a 2-axis or 3-axis gyro sensor, or an angular velocity sensor.

The camera device (10A) may comprise a controller (80). The controller (80) may be disposed on the PCB (50). The controller (80) may be electrically connected to a coil (330) of lens driving device (10). The controller (80) may individually control the direction, intensity and amplitude of a current supplied to the coil (330). The controller (80) may control the lens driving device (10) to perform the auto focus function and/or OIS function. Furthermore, the controller (80) may perform the auto focus feedback control and/or OIS feedback control onto the lens driving device (10).

The camera device (10A) may comprise a connector (90). The connector (90) may be electrically connected to the PCB (50). The connector (90) may comprise a port for being electrically connected to an outside device.

Hereinafter, an optical device will be described with reference to the attached drawings according to a first exemplary embodiment of the present invention.

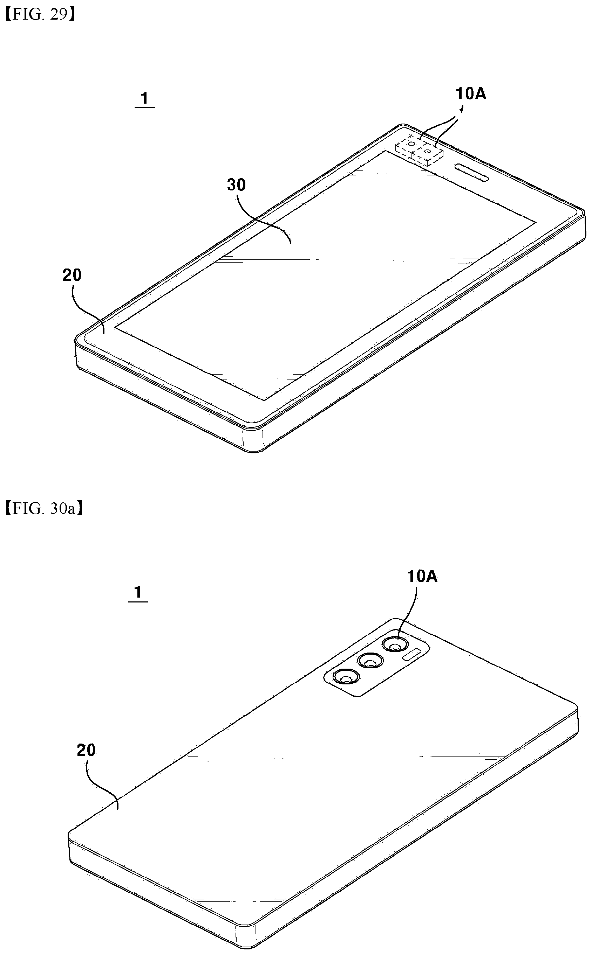

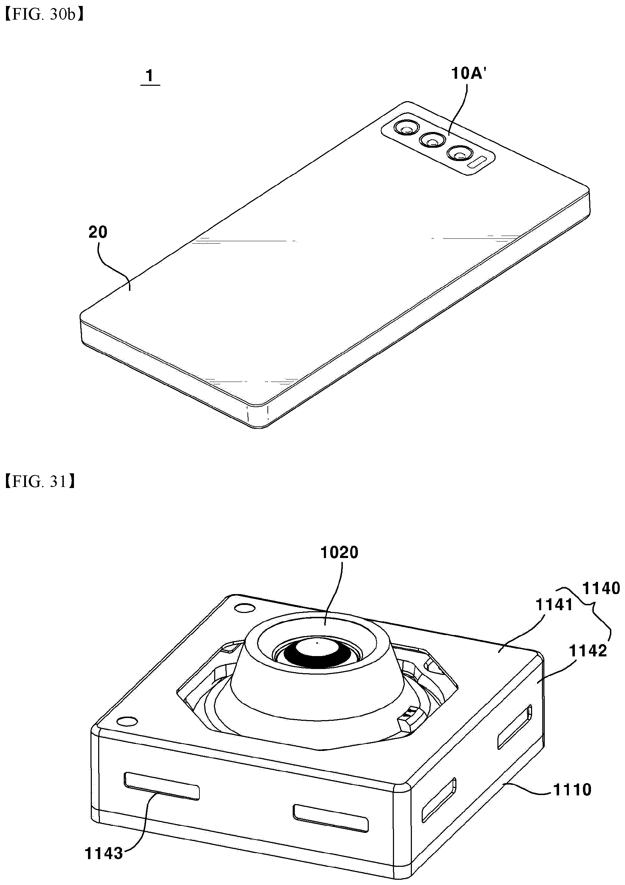

FIG. 29 is a perspective view of an optical device according to a first exemplary embodiment of the present invention, FIG. 30a is a perspective view of an optical device according to a first exemplary embodiment of the present invention seen from a direction different from FIG. 29, and FIG. 30b is a perspective view of an optical device according to a modification.

An optical device (1) may be any one or more of hand phones, portable phones, portable terminals, mobile terminals, smart phones, smart pads, portable smart devices, digital cameras, notebooks, laptop computers, digital broadcasting terminals, PDAs (Personal Digital Assistants), PMPs (Portable Multimedia Players) and navigations. The optical device (1) may comprise any devices for shooting (photographing) images or photographs.

The optical device (1) may comprise a body (20). The optical device (1) may comprise a camera device (10A). The camera device (10A) may be disposed on the body (20). The camera device (10A) may photograph an object. The optical device (1) may comprise a display (30). The display (30) may be disposed on the body (20). The display (30) may output any one or more of images and videos photographed by the camera device (10A). The display (30) may be disposed on a first surface of body (20). The camera device (10A) may be disposed on any one or more of the first surface of body (20) and a second surface opposite the first surface. As shown in FIG. 30a, the camera device (10A) may have its triple cameras disposed to a longitudinal direction. As shown in FIG. 30b, a camera device (10A') may have its triple cameras disposed to a cross direction.

Hereinafter, configuration of a lens driving device according to a second exemplary embodiment of the present invention will be described with reference to the accompanying drawings.

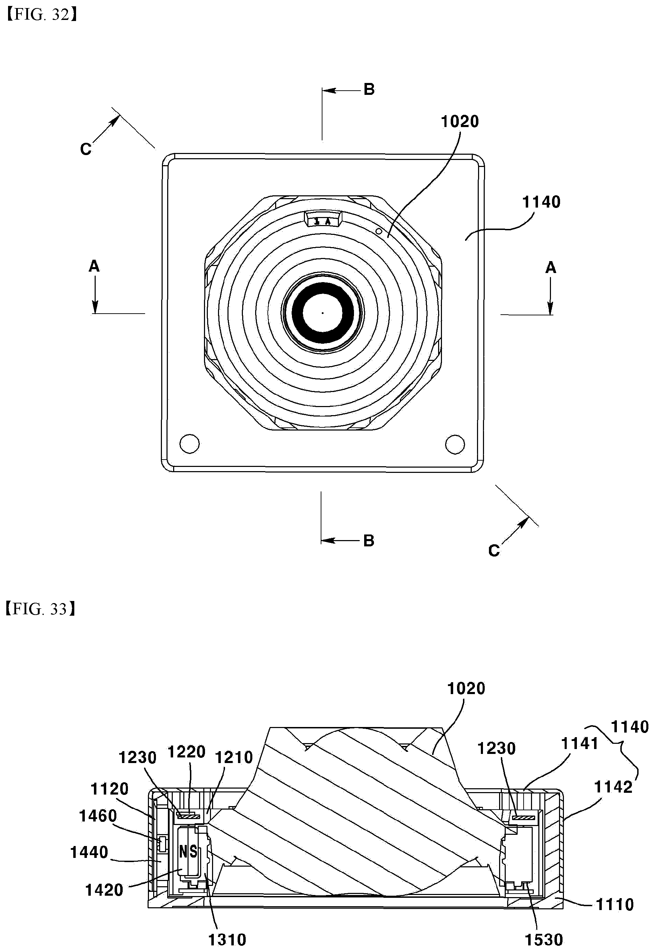

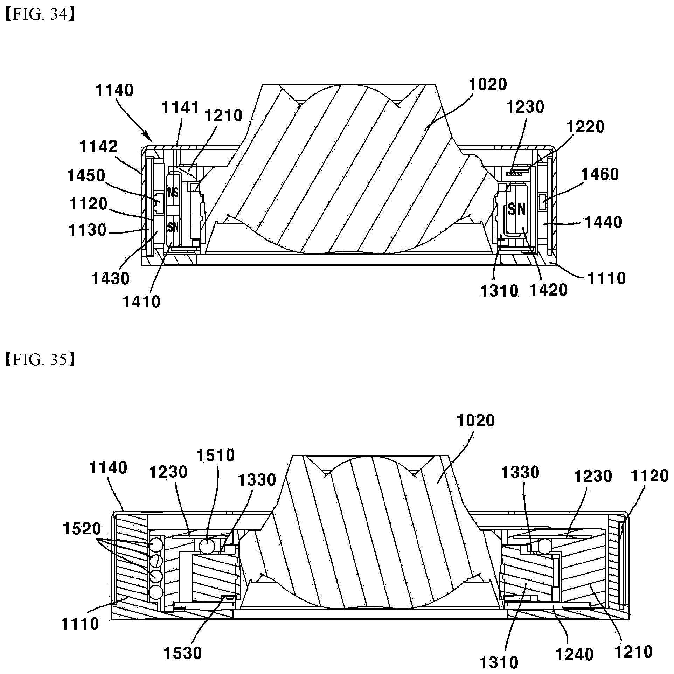

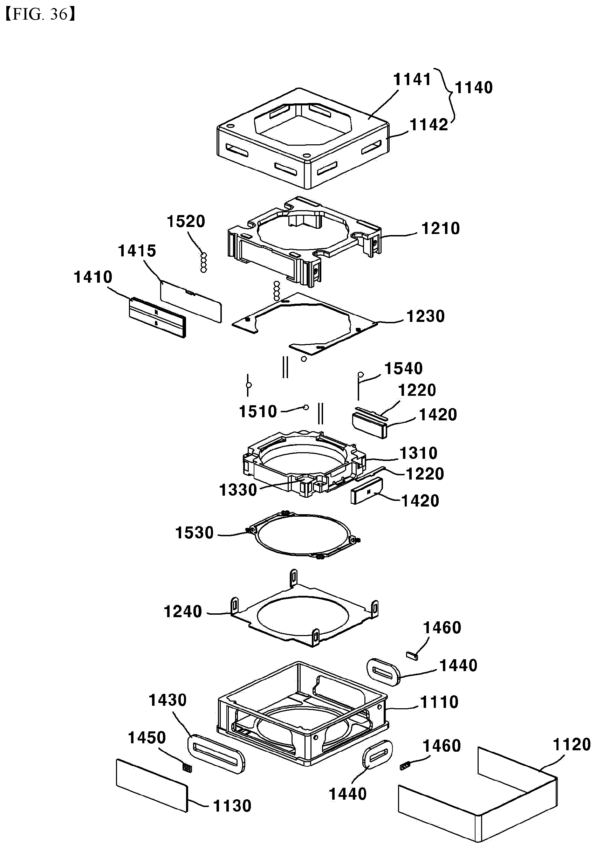

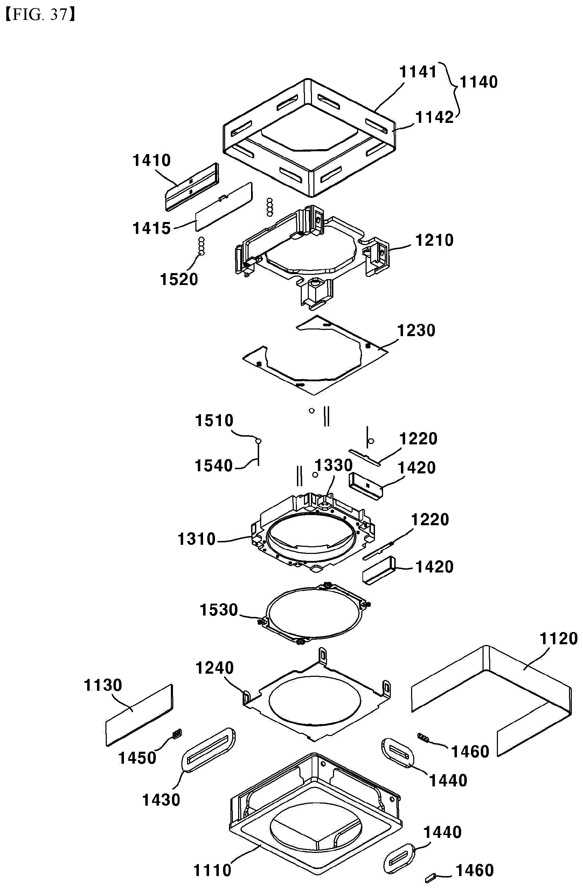

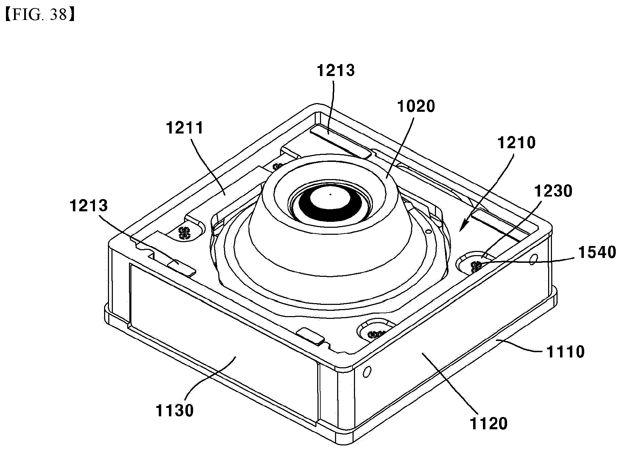

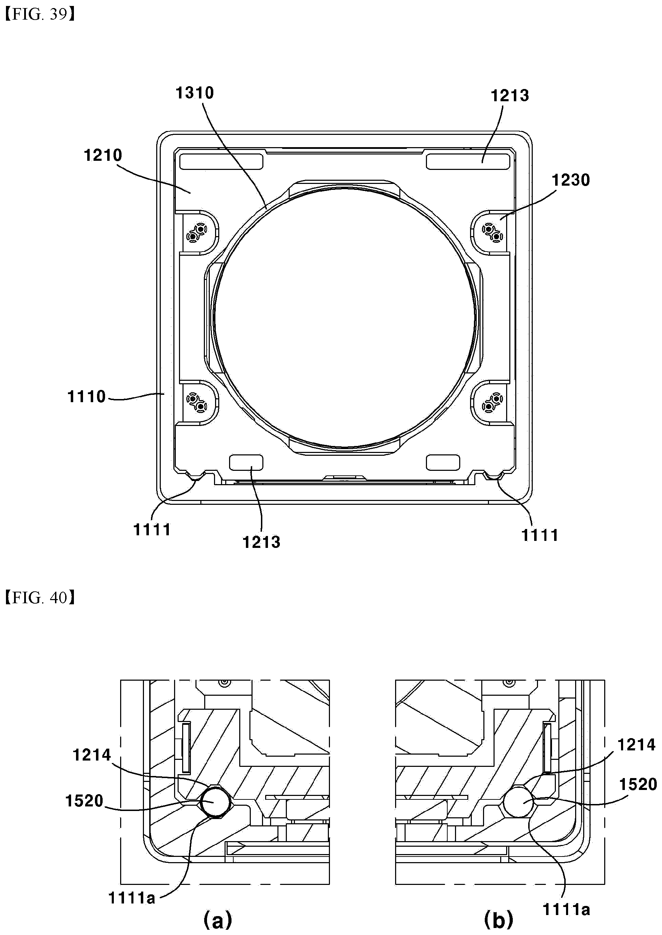

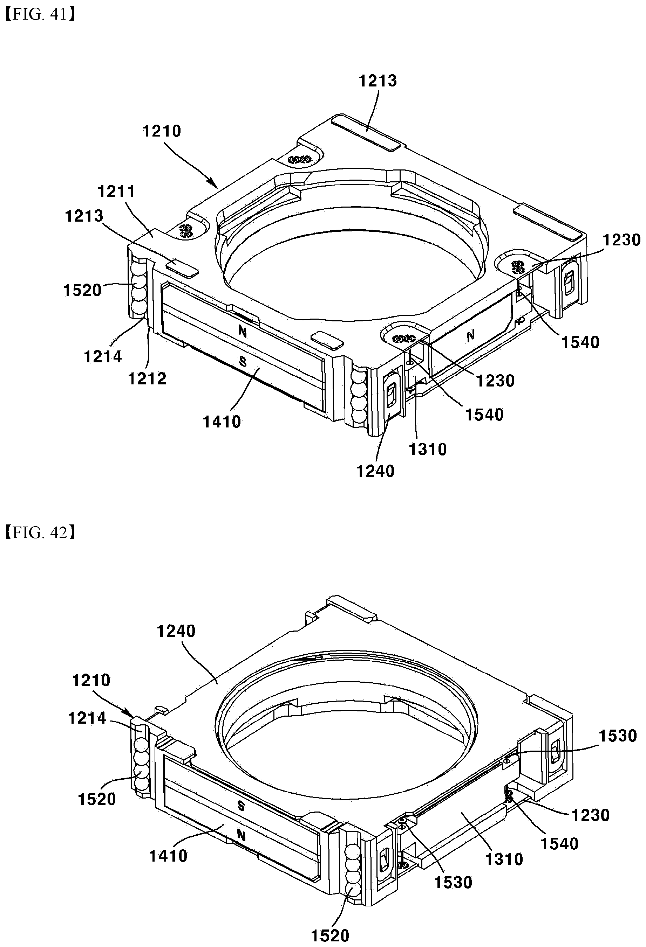

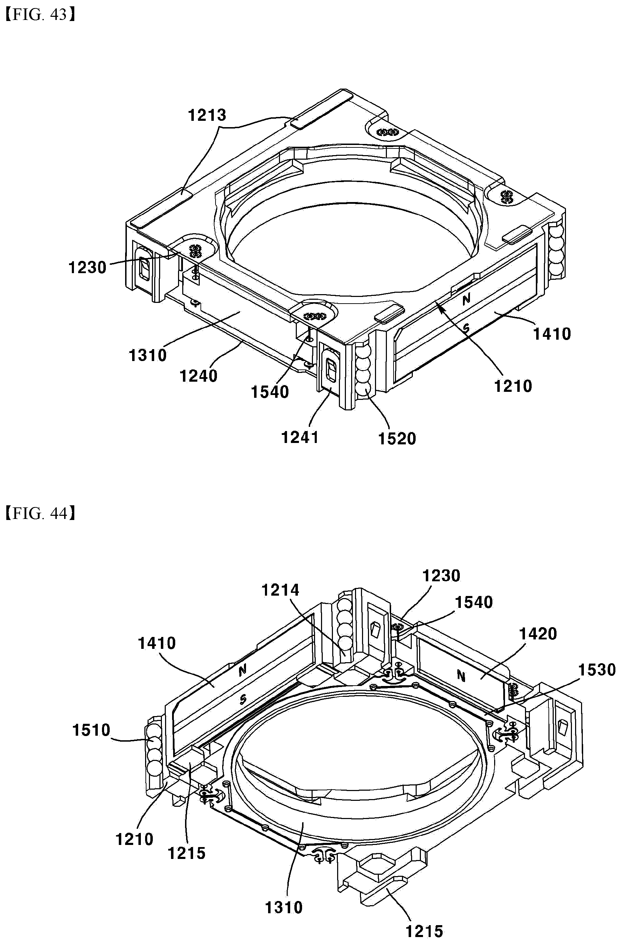

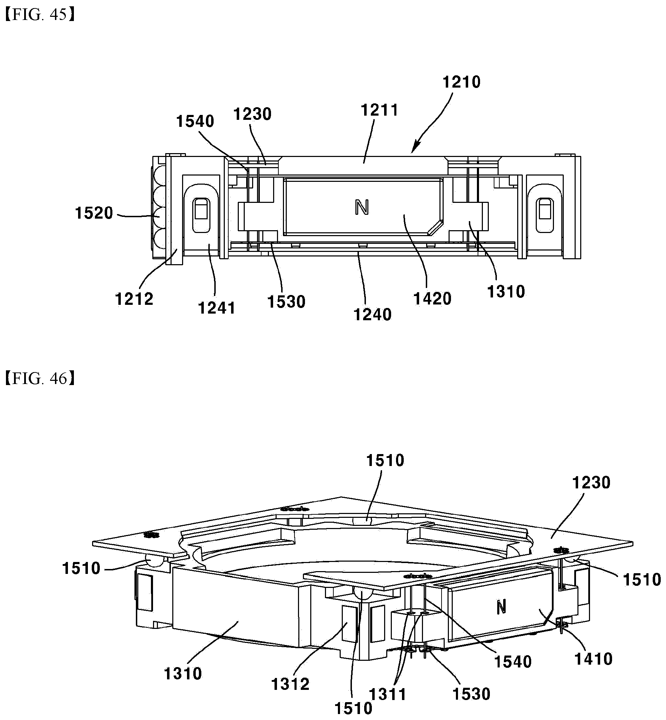

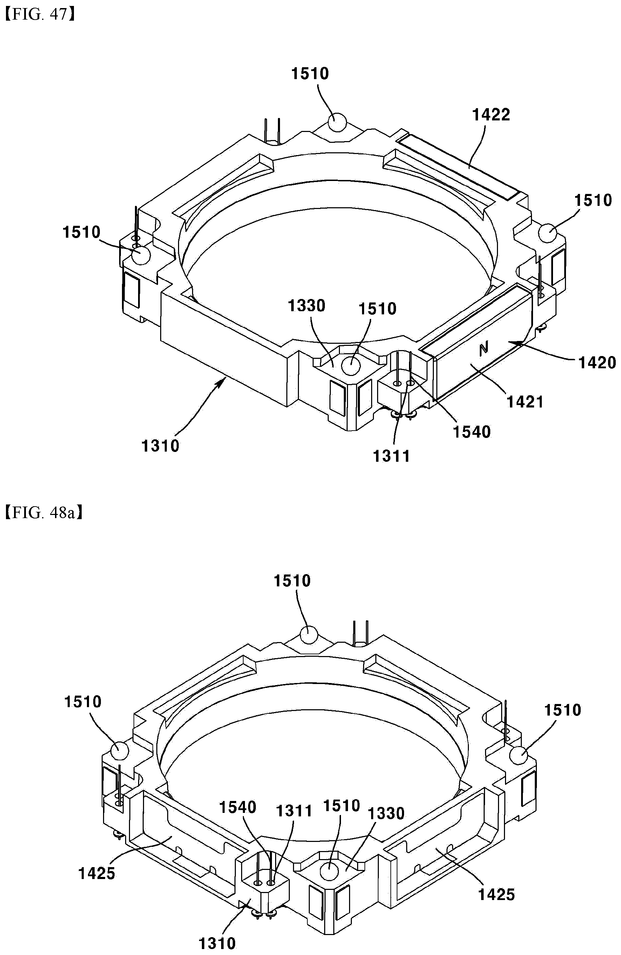

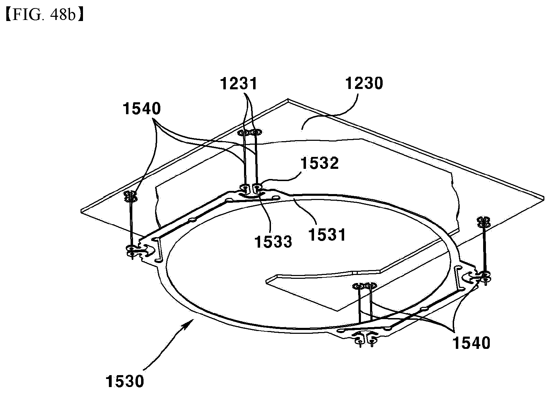

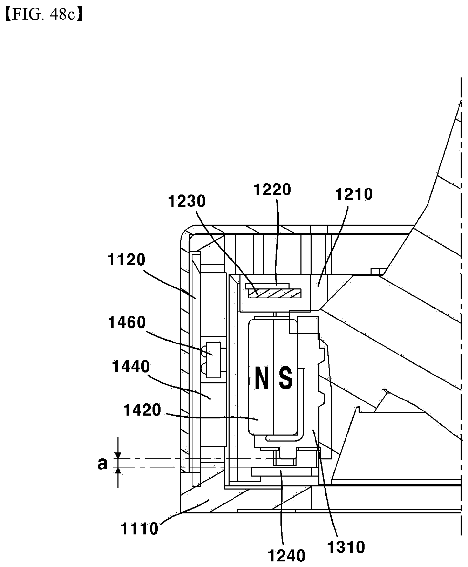

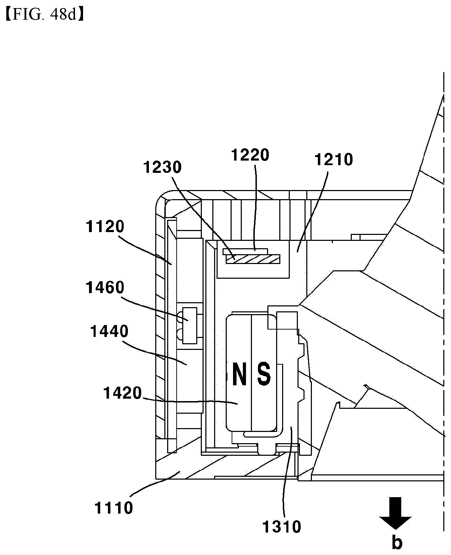

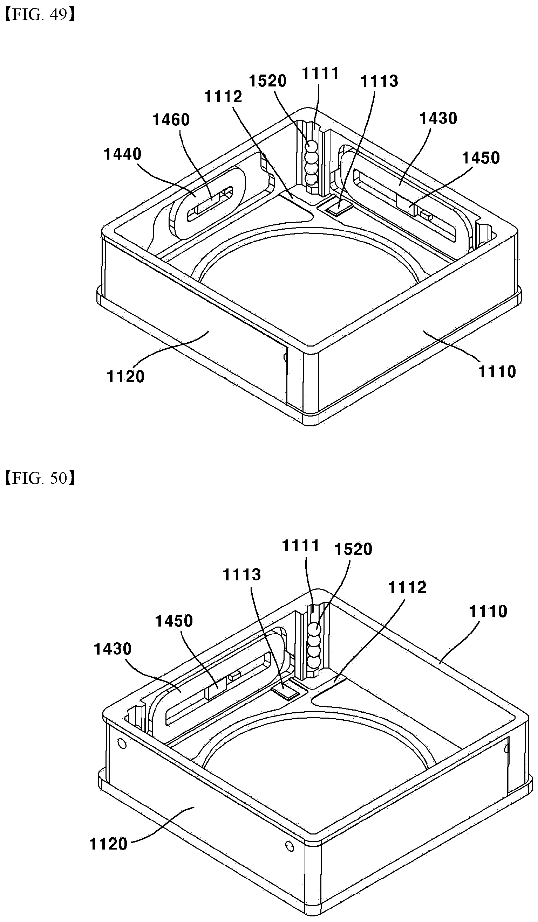

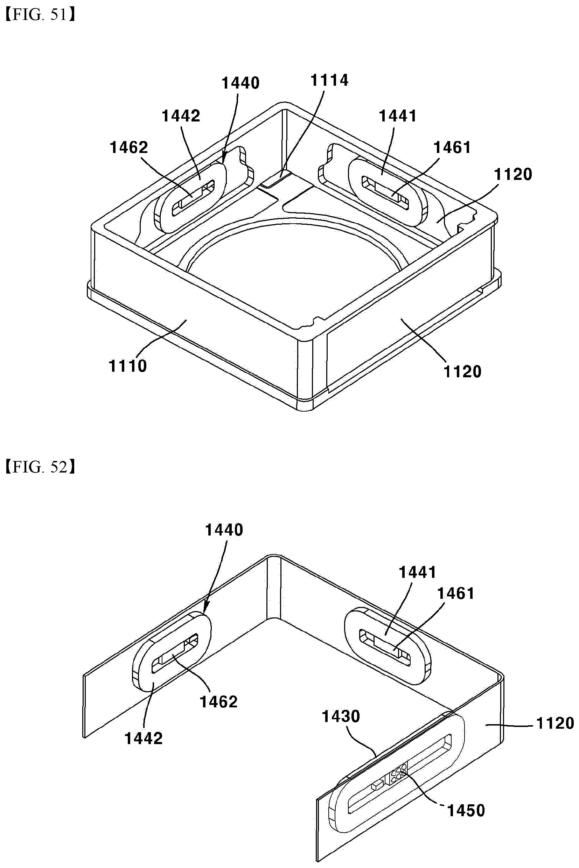

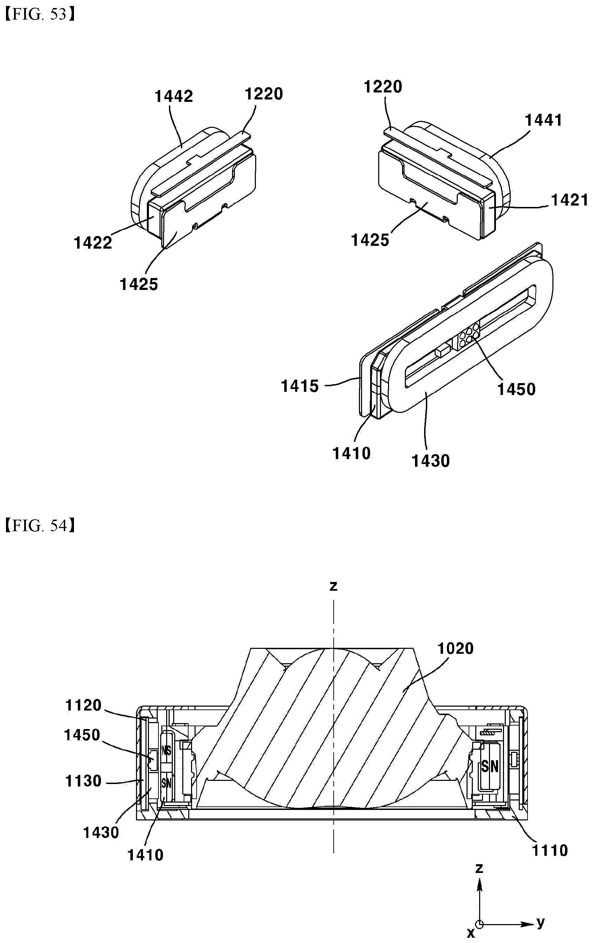

FIG. 31 is a perspective view of a state in which a lens driving device and a lens are coupled according to a second exemplary embodiment of the present invention, FIG. 32 is a plan of FIG. 31 seen from above, FIG. 33 is a cross-sectional taken along line A-A of FIG. 32, FIG. 34 is a cross-sectional view taken along line B-B of FIG. 32, FIG. 35 is a cross-sectional view taken along line C-C of FIG. 32, FIG. 36 is an exploded perspective view of a lens driving device according to a second exemplary embodiment of the present invention, FIG. 37 is an exploded perspective view of FIG. 36 seen from a different direction, FIG. 38 is a perspective view of a state in which a cover is omitted from FIG. 31, FIG. 39 is a plan of a state in which a cover is omitted from a lens driving device according to a second exemplary embodiment of the present invention, FIGS. 40 (a) and (b) are partial enlarged views of a cross-section illustrating an AB ball placement structure of a lens driving device according to a second exemplary embodiment of the present invention, FIG. 41 is a perspective view illustrating a configuration related to a moving part according to a second exemplary embodiment of the present invention, FIG. 42 is a partial perspective view of FIG. 41 seen from a different direction, FIG. 43 is a perspective view of a moving part comprising a housing inserted by a metal member, FIG. 44 is a bottom perspective view of a moving part according to a second exemplary embodiment of the present invention, FIG. 45 is a lateral view of a moving part according to a second exemplary embodiment of the present invention, FIG. 46 is a perspective view illustrating a state of a second moving part being coupled to a metal member of a first moving part through a wire, FIG. 47 is a perspective view of a configuration related to a second moving part, FIG. 48a is a perspective view of a state omitted of an AF magnet from FIG. 47, FIG. 48b is a perspective view illustrating a coupled structure of wire according to a second exemplary embodiment of the present invention, FIG. 48c is a cross-sectional view illustrating a retainer and related structures according to a second embodiment of the present invention, and FIG. 48d is a cross-sectional view illustrating a state in which the retainer is omitted and the moving part is moved downward to its maximum in the second embodiment of the present invention, FIG. 49 is a perspective view of a configuration related to a fixed part according to a second exemplary embodiment of the present invention, FIGS. 50 and 51 are perspective views of a configuration related to a fixed part according to a second exemplary embodiment of the present invention seen from a direction different from FIG. 49, FIG. 52 is a perspective view illustrating a placement structure of a substrate, a coil and a sensor, and FIG. 53 is a perspective view illustrating a configuration related to a driving part according to a second exemplary embodiment of the present invention.

A lens driving device (1010) may be a VCM (Voice Coil Motor). The lens driving device (1010) may be a lens driving motor. The lens driving device (1010) may be a lens driving actuator. The lens driving device (1010) may comprise an AF module. The lens driving device (1010) may comprise an OIS module.

The lens driving device (1010) may comprise a fixed part. The fixed part may be a portion relatively fixed while the moving part moves. The moving part may move relative to the fixed part.

The lens driving device (1010) may comprise a base (1110). The fixed part may comprise a base (1110). The base (1110) may be disposed outside of a housing (1210). At least a portion of the base (1110) may be disposed between the housing (1210) and a cover (1140). The base (1110) may be coupled with the cover (1140).

The base (1110) may comprise a groove (1111). The groove (1111) may accommodate at least a portion of an AF ball (1520). The groove (1111) may accommodate an AF ball reception groove. The groove (1111) may be disposed on both sides of AF magnet (1410). The groove (1111) may comprise a plurality of grooves. The groove (1111) may comprise two grooves. The said two grooves (1111) may be formed with the same shape. Alternatively, the two grooves (1111) may be formed with mutually different shapes. Any one of the two grooves (1111) may contact the AF ball (1520) at two points, and another may contact the AF ball (1520) at one point. Each of the two grooves (1111) may be disposed with three AF balls (1520). The groove (1111) may comprise a first groove (1111a). The first groove (1111a) may contact the AF ball (1520) at one point. The first groove (1111a) may be a U-shaped groove. However, the AF ball (1520) may contact the first groove (1111a) at two points due to movement of AF ball (1520). The groove (1111) may comprise a second groove (1111b). The second groove (1111b) may provide a narrower space than that of the first groove (1111a) relative to the AF ball (1520), through which the second groove (1111b) may contact the AF ball (1520) at the two points. The second groove (1111b) may be a V-shaped groove. The first groove (1111a) may be disposed at one side of AF magnet (1410). The second groove (1111b) may be disposed at the other side of AF magnet (1410). That is, the AF magnet (1410) may be disposed between the first groove (1111a) and the second groove (1111b).

The base (1110) may comprise a (1112). The dam (1112) may be disposed on an upper surface of a lower plate of base (1110). The dam (1112) may prevent the grease coated on the AF ball (1520) from overflowing. That is, the dam (1112) may accommodate the grease thereinside. The dam (1112) may protrusively formed on an upper surface of a lower plate of base (1110). The dam (1112) may be protruded from an upper surface of lower plate of base (1110).

The base (1110) may comprise a first protruding part (1113). The first protruding part (1113) of base (1110) may contact a lower stopper (1215) of housing (1210). The first protruding part (1113) of base (1110) may protrude from an upper surface of lower plate of base (1110). The first protruding part (1113) may be so disposed as to be spaced apart from the dam (1112).

The base (1110) may comprise a second protruding part (1114). The second protruding part (1114) may contact the lower stopper (1215) of housing (1210). When the housing (1210) is moved to a lower side of an optical axis direction according to the second exemplary embodiment of the present invention, the lower stopper (1215) of housing (1210) may simultaneously contact the first protruding part (1113) and the second protruding part (1114) of base (1110). However, as a modification, when the housing (1210) is moved to a lower side of optical axis direction, the lower stopper (1215) of housing (1210) may first contact the first protruding part (1113) of base (1110), and the second protruding part (1114) may be contacted later or may not be contacted. Alternatively, as another modification, when the housing (1210) moves to a lower side of optical axis direction, the lower stopper (1215) of housing (1210) may first contact the second protruding part (1114) of base (1110) and contact the first protruding part (1113) later, or never contact.

The lens driving device (1010) may comprise a substrate (1120). The fixed part may comprise a substrate (1120). The substrate (1120) may be disposed on the base (1110). The substrate (1120) may comprise an FPCB (flexible printed circuit board). The substrate (1120) may be disposed on a lateral surface of base (1110). The substrate (1120) may comprise a bent portion to wrap a plurality of lateral surfaces of base (1110). The substrate (1120) may be electrically connected to a PCB (1050). The substrate (1120) may comprise a terminal part formed with a plurality of terminals. The terminals of substrate (1120) may be formed at a lower end of the substrate (1120), and may be connected to the terminals of PCB (1050) by a conductive member.

The lens driving device (1010) may comprise an attraction member. The lens driving device (1010) may comprise a pressing member that provides a pressure to the AF ball (1520). The lens driving device (1010) may comprise an adhesion member that tightly closes the AF ball (1520) to between the base (1110) and the housing (1210). The lens driving device (1010) may comprise an attraction member and an adhesion member separate from the adhesion member. The lens driving device (1010) may comprise a yoke (1010). The attraction member may comprise a yoke (1130). The attraction member may comprise a magnetic member. The fixed part may comprise a yoke (1130). The yoke (1130) may be disposed at an external surface of substrate (1120). The yoke (1130) may be disposed at an opposite side of AF coil (1430) based on the substrate (1120). The yoke (1130) may be disposed at a position corresponding to that of the AF magnet (1410). An attraction may be applied between the yoke (1130) and the AF magnet (1410). The yoke (1130) may comprise a metal. The AF ball (1520) may maintain a contacted state between the base (1110) and the housing (1210) because of the attraction between the yoke (1130) and the AF magnet (1410).

The lens driving device (1010) may comprise a cover (1140). The fixed part may comprise a cover (1140). The cover (1140) may be a case. The cover (1140) may be disposed on the base (1110). The cover (1140) may be coupled to the base (1110). The cover (1140) may be fixed to the base (1110). The cover (1140) may be accommodated into the housing (1210). The cover (1140) may be accommodated into the lens holder (1310). The cover (1140) may be a shield member. The cover (1140) may be shield can. The cover (1140) may interdict an EMI (electromagnetic interference). At this time, a cover member (1330) may be an EMI shield can.

The cover (1140) may comprise an upper plate (1141). The upper plate (1141) may be disposed on a first moving part. The upper plate (1141) may be disposed on a second moving part. The upward movement of first moving part may be restricted by the first moving part being contacted to the upper plate (1141). The upper plate (1141) may comprise a hole through which a light passes.

The cover (1140) may comprise a lateral plate (1142). The lateral plate (1142) may be extended from the upper plate (1141). The lateral plate (1142) may be disposed on the base (1110). The lateral plate (1142) may be disposed on a staircase part protrusively formed at a lower end of the external surface of base (1110). The lateral plate (1142) may comprise a plurality of lateral plates. The lateral plate (1142) may comprise four (4) lateral plates. The lateral plate (1142) may comprise first and second lateral plates each disposed on an opposite side, and third and fourth lateral plates each disposed on an opposite side.

The cover (1140) may comprise a hole (1143). The hole (1143) may be an adhesive infusion hole. An adhesive may be infused into the cover (1140) through the hole (1143). The hole (1143) may be formed on the lateral plate (1142) of cover (1140). The hole (1143) may be respectively formed on four (4) lateral plates (1142). Two holes (1143) may be respectively formed on each of the four lateral plates (1142).

The lens driving device (1010) may comprise a moving part. The moving part may be moved to the fixed part by the driving part. The moving part may comprise a first moving part that moves during AF driving. The moving part may comprise a second moving part that moves during OIS driving. The second moving part may be moved during both the AF driving and the OIS driving. The second moving part may be coupled by a lens. The first moving part may be disposed between the second moving part and the fixed part.

The lens driving device (1010) may comprise a first moving part. The first moving part may be moved during AF driving. The first moving part may be moved by an AF driving part. The first moving part may be moved to an optical axis direction. The first moving part may be dispose on a fixed part. The first moving part may be disposed within the fixed part. The first moving part may be movably disposed within the fixed part to an optical axis direction.

The lens driving device (1010) may comprise a housing (1210). The first moving part may comprise a housing (1210). The housing (1210) may be a holder. The housing (1210) may be disposed within a base (1110). The housing (1210) may be disposed at an outside of a lens holder (1310). The housing (1210) may be disposed between the lens holder (1310) and the base (1110). The housing (1210) may be movably disposed within the base (1110) to an optical axis direction. The housing (1210) may be moved during AF driving. The housing (1210) may not be moved during an OIS driving.

The housing (1210) may comprise an upper plate (1211). The upper plate (1211) may be disposed on an upper side of lens holder (1310). The upper plate (1211) may be disposed with an OIS ball (1510). A lower surface of upper plate (1211) may be contacted by an OIS ball (1510). The upper plate (1211) may comprise an attraction member (1220) therein. The upper plate (1211) may comprise a metal member (1230) therein. The upper plate (1211) may comprise a hole through which a light passes.

The housing (1210) may comprise a lateral plate (1212). The lateral plate (1212) may be extended from the upper plate (1211). The lateral plate (1212) may be disposed with an AF magnet (1410). The lateral plate (1212) may be formed with a groove in which an AF magnet (1410) is housed. The lateral plate (1212) may comprise a hole at a position corresponding to that of the OIS magnet (1420).

The housing (1210) may comprise an upper stopper (1213). The upper stopper (1213) may be formed at an upper surface of upper plate (1211) of housing (1210). The upper stopper (1213) may restrict an upward movement of housing (1210). The upper stopper (1213) may contact the upper plate (1141) of cover (1140) when the housing (1210) is moved upwards to an optical axis direction. The upper stopper (1213) may comprise a plurality of protoruders. The upper stopper (1213) may comprise four (4) protrusions. The upper stopper (1213) may respectively be formed on four (4) corner areas of upper surface of upper plate (1211) of housing (1210).

The housing (1210) may comprise a groove (1214). The groove (1214) may accommodate at least a portion of an AF ball (1520). The groove (1214) may be an AF ball reception groove. The groove (1214) may be disposed at both sides of AF magnet (1410). The groove (1214) may comprise a plurality of grooves. The groove (1214) may comprise two (2) grooves. The said two grooves (1214) may take the same shape. Alternatively, the said two grooves (1214) may not be formed with the same shape. Any one of two grooves (1214) may contact the AF ball (1520) at two points, and the other may contact the AF ball (1520) at one point. Each of the two grooves (1214) may be disposed with three (3) AF balls (1520).

The housing (1210) may comprise a lower stopper (1215). The lower stopper (1215) may be disposed at a lower end of lateral plate (121) of housing (1210). The lower stopper (1215) may restrict the downward movement of housing (1210). The lower stopper (1215) may contact the lower plate of base (1110) when the housing (1210) downwardly moves on an optical axis direction. The lower stopper (1215) may comprise a plurality of stoppers. The lower stopper (1215) may comprise four (4) stoppers. The lower stopper (1215) may be respectively formed on four corner areas of housing (1210). Meantime, only some of the plurality of lower stoppers (1215) may be so formed as to first contact the base (1110).

The lens driving device (1010) may comprise a pressing member. The lens driving device (1010) may comprise a pressing member that provides pressure to an OIS ball (1510). The lens driving device (1010) may comprise an adhesion member that tightly closes the OIS ball (1510) to between the lens holder (1310) and the housing (1210). The lens driving device (1010) may comprise a pressing member and an adhesion member which is separate from the pressing member. The pressing member or the adhesion member may be an attraction member (1220). The lens driving device (1010) may comprise an attraction member (1220). The first moving part may comprise an attraction member (1220). The attraction member (1220) may comprise a yoke. The attraction member (1220) may comprise a magnetic body (substance). The attraction member (1220) may comprise a magnetic member. The attraction member (1220) may be disposed on a housing (1210). The attraction member (1220) may be disposed on an upper plate (1211) of housing (1210). The attraction member (1220) may be disposed within a housing (1210). The attraction member (1220) may be internally accommodated within a housing (1210). That is, the attraction member (1220) may be so disposed as not to be seen from an exterior of housing (1210). The attraction member (1220) may be inserted within a housing (1210). The attraction member (1220) may apply attraction to an OIS magnet (1420). The attraction member (1220) may comprise a metal. The attraction member (1220) may possess the magnetism. Alternatively, the attraction member (1220) may be a metal having no magnetism. The attraction member (1220) may be disposed on a position corresponding to that of the OIS magnet (1420). The attraction member (1220) may be overlapped with an OIS magnet (1420) to an optical axis direction. The attraction member (1220) may be disposed on an OIS magnet (1420). The attraction member (1220) may pull up an OIS magnet (1420) upwardly. The OIS ball (1510) may maintain a contacted state between the upper plate (1211) of housing (1210) and the lens holder (1310) through the attraction between the attraction member (1220) and the OIS magnet (1420). The attraction member (1220) may be disposed at an upper surface of metal member (1230). The attraction member (1220) may be so disposed as to be contacted to the metal member (1230). As a modification, the attraction member (1220) may be spaced apart from the metal member (1230). The attraction member (1220) may be so formed as to be a member separate from the metal member (1230). The attraction member (1220) may be omitted in the modification. When the attraction member (1220) is omitted, the pressure applied to the OIS ball (1510) may be generated through a wire (1540) and an elastic member (1530).

The lens driving device (1010) may comprise a metal member (1010). The first moving member may comprise a metal member (1230). The metal member (1230) may be disposed on the housing (1210). The metal member (1230) may be disposed on the upper plate (1211) of housing (1210). At least a portion of the metal member (1230) may be internally disposed within the housing (1210). The metal member (1230) may be partially seen from an exterior of housing (1210). The metal member (1230) may be disposed with an OIS ball (1510). The metal member (1230) may be contacted by an OIS ball (1510). The flatness of rolling surface of OIS ball (1510) may be easily managed by the metal member (1230). Furthermore, the dent phenomenon generated by shock on an OIS ball (1510) and/or housing (1210) may be prevented by the metal member (1230). The metal member (1230) may be a yoke.

The metal member (1230) may comprise a hole (1231). The hole (1231) of metal member (1230) may be inserted by a wire (1540). The wire (1540) may be so disposed as to pass through the hole (1231) of metal member (1230). The wire (1540) may be coupled to the hole (1231) of metal member (1230). The metal member (1230) may comprise a region inserted into a housing (1210), and an opened region. The hole (1231) may be formed on an opened region of metal member (1230). That is, the wire (1540) may be coupled to the opened region of metal member (1230). The wire (1540) may be spaced apart from the housing (1210).

The metal member (1230, 1330) in the second exemplary embodiment of the present invention may be disposed on at least one of the housing (1210) and the lens holder (1310). At this time, the OIS ball (1510) may be so disposed as to roll along the metal member (1230, 1330). The OIS ball (1510) may contact a surface of metal member (1230, 1330). However, when grease is coated on the OIS Ball (1510), the grease may be disposed between the OIS ball (1510) and the metal member (1230, 1330).

The lens driving device (10) may include a retainer (240). The first moving part may include a retainer (240). The retainer (240) may be an AF stopper. The retainer (240) may be a stopper. The retainer (240) may be coupled to housing (210). The retainer (240) 240 may be coupled below housing (210). The retainer (240) may be hook-coupled to the housing (210). The retainer (240) may be fixed to housing (210). The retainer (240) may be disposed in housing (210). The retainer (240) may be disposed below the lens holder (310). The retainer (240) may be disposed between the lens holder (310) and the base (110) in an optical axis direction. The retainer (240) may be disposed between the lens holder (310) and the base (110).

The retainer (240) can prevent the lens holder (310) from falling down phenomenon due to impact. The retainer (240) can prevent the elastic member (530) from being deformed. **In** this embodiment, the deformation of the elastic member (530) can be managed below the yield stress through the retainer (240). The retainer (240) may limit the downward movement distance of the lens holder (310).

As illustrated in FIG. 18c, the lens holder (310) and the retainer (240) may be spaced apart by a first distance (refer to a in FIG. 18c) in an optical axis direction. Accordingly, the lens holder (310) can only move downward within the first separation distance even when an external impact is applied. That is, when the lens holder (310) moves downward as much as possible, it may come into contact with the retainer (240). Through this structure, excessive deformation of the elastic member (530) coupled to the lens holder (310) can be prevented. In other words, the deformation of the elastic member (530) can be managed as a deformation below the yield stress.

In the comparative example shown in FIG. 18d, the retainer (240) may be omitted. In this case, the lens holder (310) may be in contact with the base (110) when it moves downward due to an external impact (refer to b in FIG. 18d). The lens holder (310) may be spaced apart from the base (110) at a second distance greater than the first distance (refer to a in FIG. 18c) in an optical axis direction. Accordingly, in the comparative example, the lens holder (310) can be moved downward further and the elastic member (530) can be deformed further. At this time, if the deformation of the elastic member (530) exceeds the yield stress, the elastic member (530) may not be restored to its original state.

The lens driving device (1010) may comprise a second moving part. The second moving part may be moved during OIS driving. The second moving part may be moved by an OIS driving part. The second moving part may be moved to a direction perpendicular to an optical axis. The second moving part may be disposed on the first moving part. The second moving part may be disposed within the first moving part. The second moving part may be disposed within the fixed part. The second moving part may be movably disposed within the first moving part to a direction perpendicular to an optical axis. The second moving part may be movably disposed within the fixed part to a direction perpendicular to an optical axis.

The lens driving device (1010) may comprise a lens holder (1310). The second moving part may comprise a lens holder (1310). The lens holder (1310) may be a bobbin. The lens holder (1310) may be disposed within a housing (1210). The lens holder (1310) may be disposed on the housing (1210). The lens holder (1310) may be disposed within a base (1110). The lens holder (1310) may be disposed within a cover (1140). The lens holder (1310) may be movably disposed to a direction perpendicular to an optical axis. The lens holder (1310) may be movably disposed within a housing (1210) to a direction perpendicular to an optical axis. The lens holder (1310) may be movably disposed within a base (1110) to a direction perpendicular to an optical axis. The lens holder (1310) may be movably disposed within a cover (1140) to a direction perpendicular to an optical axis.

The lens holder (1310) may comprise a support part (1311). The support part (1311) may support an OIS ball (1510). The support part (1311) may be formed with a shorter length than that of other portions of lens holder (1310) to an optical axis direction. It should be appreciated that an upper side of support part (1311) of lens holder (1310) is formed with a groove for placing an OIS ball (1510). The support part (1311) may be disposed with an OIS ball (1510). The support part (1311) may be disposed with a metal member (1330). The support part (1311) may be a corner area of lens holder (1310). It should be appreciated that the support part (1311) is a portion of lens holder (1310) as a portion to support the OIS ball (1510).

The lens holder (1310) may comprise a lateral stopper (1312). The lateral stopper (1312) may be formed at a lateral surface of lens holder (1310). The lateral stopper (1312) may be protrusively formed from a lateral surface of lens holder (1310). The lateral stopper (1312) may restrict the lateral movement of lens holder (1310). The lateral stopper (1312) may contact a housing (1210) when the lens holder (1310) is moved to a direction perpendicular to an optical axis. The lateral stopper (1312) may comprise a plurality of protrusions. The lateral stopper (1312) may comprise an x axis direction stopper and a y axis direction stopper.

The lens driving device (1010) may comprise a metal member (1330). The second moving part may comprise a metal member (1330). The metal member (1330) may be disposed on a lens holder (1310). The metal member (1330) may face the metal member (1230). At least one portion of the metal member (1330) may be internally disposed within a lens holder (1310). The metal member (1330) may be partially seen from an exterior of lens holder (1310). The metal member (1330) may be disposed with an OIS ball (1510). The metal member (1330) may be contacted by an OIS ball (1510). The flatness of rolling surface of OIS ball (1510) may be easily managed by the metal member (1330). Furthermore, the dent phenomenon generated by shock on an OIS ball (1510) and/or lens holder (1310) may be prevented by the metal member (1330). The metal member (1330) may be a yoke.

The lens driving device (1010) may comprise a driving part. The driving part may move a moving part. The driving part may move the moving part relative to the fixed part. The driving part may comprise a first driving part to move a first moving part. The first driving part may comprise an AF driving part. The driving part may comprise a second driving part to move a second driving part. The second driving part may comprise an OIS driving part. The driving part may comprise a coil and a magnet. The first driving part may comprise an AF coil (1430) and an AF magnet (1410). The second driving part may comprise an OIS coil (1440) and an OIS magnet (1420). The first driving part may move the first moving part to an optical axis direction. The second driving part may move the second moving part to a direction perpendicular to an optical axis. A lens may be moved along with the first moving part and the second moving part.

The lens driving device (1010) may comprise an AF magnet (1410). A driving part may comprise an AF magnet (1410). The AF magnet (1410) may be disposed on a housing (1210). The AF magnet (1410) may be disposed at a lateral plate (1212) of housing (1210). The AF magnet (1410) may be fixed to the housing (1210). The AF magnet (1410) may be coupled to the housing (1210). The AF magnet (1410) may be attached to the housing (1210) using an adhesive. The AF magnet (1410) may be disposed within a cover (1140). The AF magnet (1410) may interact with an AF coil (1430). The AF magnet (1410) may electromagnetically interact with the AF coil (1430). The AF magnet (1410) may be disposed at a position corresponding to that of the AF coil (1430). The AF magnet (1410) may face the AF coil (1430). The AF magnet (1410) may face the AF coil (1430). The AF magnet (1410) may be overlapped with the AF coil to a direction perpendicular to an optical axis.

The AF magnet (1410) may be a four (4) pole magnet. The AF magnet (1410) may be a four pole magnetized magnet. An upper surface of the AF magnet (1410) may comprise an N pole and an S pole, a lower end of the AF magnet (1410) may comprise an S pole and an N pole, and a center of AF magnet (1410) may be a neutral zone. To be more specific, an outer surface of upper end of the AF magnet (1410) may be an N pole, and an inner surface of the upper surface may be an S pole. An outer surface of a lower end of the AF magnet may be an S pole and an inner surface of a lower end may be an N pole. The upper surface and a lower surface of AF magnet (1410) may be mutually spaced apart by a neutral zone. The AF magnet (1410) may be formed by vertically stacking two single magnets.

The lens driving device (1010) may comprise a yoke (1415). A driving part may comprise a yoke (1415). The yoke (1415) may be disposed on a housing (1210). The yoke (1415) may be disposed between an AF magnet (1410) and the housing (1210). The yoke (1415) may concentrate the magnetism of AF magnet (1410) to a direction facing an AF coil (1430). That is, the yoke (1415) may minimize the leakage of magnetism of AF magnet (1410) to a direction opposite to the AF coil (1430).

The lens driving device (1010) may comprise an OIS magnet (1420). A driving part may comprise an OIS magnet (1420). The OIS magnet (1420) may be disposed on a lens holder (1310). The OIS magnet (1420) may be disposed on a lateral surface of lens holder (1310). The OIS magnet (1420) may be disposed on a groove of lens holder (1310). The OIS magnet (1420) may be fixed to the lens holder (1310). The OIS magnet (1420) may be coupled to the lens holder (1310). The OIS magnet (1420) may be attached to the lens holder (1310) using an adhesive. The OIS magnet (1420) may be disposed within a housing (1210). The OIS magnet (1420) may be disposed within a cover (1140). The OIS magnet (1420) may interact with an OIS coil (1440). The OIS magnet (1420) may electromagnetically interact with the OIS coil (1440). The OIS magnet (1420) may be disposed on a position corresponding to that of the OIS coil (1440). The OIS magnet (1420) may face the OIS coil (1440). The OIS magnet (1420) may face the OIS coil (1440). The OIS magnet (1420) may be overlapped with the OIS coil (1440) to a direction perpendicular to an optical axis.

The OIS magnet (1420) may be a two pole magnet. The OIS magnet (1420) may be two pole magnetized magnet. The OIS magnet (1420) may comprise an N pole and an S pole. For example, the OIS magnet (1420) may has a N pole at an outer surface facing the OIS coil (1440), and has an S pole at an inner surface opposite the outer surface. Conversely, an outer surface of OIS magnet may be an S pole and an inner surface may be an N pole.

The lens driving device (1010) may comprise an OIS-x magnet (1421). A driving part may comprise an OIS-x magnet (1421). The OIS magnet (1420) may comprise an OIS-x magnet (1421). The OIS-x magnet (1421) may be disposed on a lens holder (1310). The OIS-x magnet (1421) may be disposed on a first lateral surface of lens holder (1310). The OIS-x magnet (1421) may be disposed on a direction where there is no AF magnet (1410). The OIS-x magnet (1421) may be disposed perpendicularly to a placement direction of AF magnet (1410). The OIS-x magnet (1421) may interact with an OIS-x coil (1441). The OIS-x magnet (1421) may electromagnetically interact with the OIS-x coil (1441). The OIS-x magnet (1421) may be disposed on a position corresponding to that of the OIS-x coil (1441). The OIS-x magnet (1421) may face the OIS-x coil (1441). The OIS-x magnet (1421) may face the OIS-x coil (1441). The OIS-x magnet (1421) may be overlapped with the OIS-x coil (1441) to a direction perpendicular to an optical axis.

The lens driving device (1010) may comprise an OIS-y magnet (1422). A driving part may comprise an OIS-y magnet (1422). The OIS magnet (1420) may comprise an OIS-y magnet (1422). The OIS-y magnet (1422) may be disposed perpendicularly to a placement direction of OIS-x magnet (1421). The OIS-y magnet (1422) may be disposed on a lens holder (1310). The OIS-y magnet (1422) may be disposed at a second lateral surface adjacent to a first lateral surface of lens holder (1310). The OIS-y magnet (1422) may be disposed where there is no AF magnet (1410). The OIS-y magnet (1422) may be disposed parallel with a placement direction of AF magnet (1410). The OIS-y magnet (1422) may interact with the OIS-y coil (1442). The OIS-y magnet (1422) may electromagnetically interact with the OIS-y coil (1442). The OIS-y magnet (1422) may be disposed on a position corresponding to that of the OIS-y coil (1442). The OIS-y magnet (1422) may face the OIS-y coil (1442). The OIS-y magnet (1422) may face the OIS-y coil (1442). The OIS-y magnet (1422) may be overlapped with the OIS-y coil (1442) to a direction perpendicular to an optical axis.

The lens driving device (1010) may comprise a yoke (1425). A driving part may comprise a yoke (1425). The yoke (1425) may be disposed on a lens holder (1310). The yoke (1425) may be disposed between a lens holder (1310) and an OIS magnet (1420). The yoke (1415) may concentrate the magnetism of OIS magnet (1420) to a direction facing an OIS coil (1440). That is, the yoke (1415) may minimize the leakage of magnetism of OIS magnet (1420) to an opposite direction of OIS coil (1440).

The lens driving device (1010) may comprise an AF coil (1430). A driving part may comprise an AF coil (1430). The AF coil (1430) may interact with an AF magnet (1410). The AF coil (1430) may move the AF magnet (1410) to an optical axis direction. The AF coil (1430) may move the AF magnet (1410) to an optical axis direction through interaction with the AF magnet (1410). The AF coil (1430) may face the AF magnet (1410). The AF coil (1430) may face the AF magnet (1410). The AF coil (1430) may be disposed at a position corresponding to that of AF magnet (1410). The AF coil (1430) may be overlapped with the AF magnet (1410) to a direction perpendicular to an optical axis. The AF coil (1430) may be disposed on a substrate (1120). The AF coil (1430) may be disposed on a base (1110). The AF coil (1430) may be disposed on a fixed part.

The lens driving device (1010) may comprise an OIS coil (1440). The driving part may comprise an OIS coil (1440). The OIS coil (1440) may interact with an OIS magnet (1420). The OIS coil (1440) may move the OIS magnet (1420) to a direction perpendicular to an optical axis. The OIS coil (1440) may move the OIS magnet (1420) to a direction perpendicular to an optical axis through an interaction with the OIS magnet (1420). The OIS coil (1440) may face the OIS magnet (1420). The OIS coil (1440) may face the OIS magnet (1420). The OIS coil (1440) may be disposed on a position corresponding to that of the OIS magnet (1420). The OIS coil (1440) may be overlapped with the OIS magnet (1420) to a direction perpendicular to an optical axis. The OIS coil (1440) may be disposed on a substrate (1120). The OIS coil (1440) may be disposed on a base (1110). The OIS coil (1440) may be disposed on a fixed part.

The lens driving device (1010) may comprise an OIS-x coil (1441). A driving part may comprise an OIS-x coil (1441). An OIS coil (1440) may comprise an OIS-x coil (1441). The OIS-x coil (1441) may interact with an OIS-x magnet (1421). The OIS-x coil (1441) may move the OIS-x magnet (1421) to an x axis direction. The OIS-x coil (1441) may move the OIS-x magnet (1421) to an x axis direction through an interaction with the OIS-x magnet (1421). The OIS-x coil (1441) may face the OIS-x magnet (1421). The OIS-x coil (1441) may face the OIS-x magnet (1421). The OIS-x coil (1441) may be disposed on a position corresponding to that of the OIS-x magnet (1421). The OIS-x coil (1441) may be overlapped with the OIS-x magnet (1421) to an x axis direction. The OIS-x coil (1441) may be disposed on a substrate (1120). The OIS-x coil (1441) may be disposed on a base (1110). The OIS-x coil (1441) may be disposed on a fixed part.

The lens driving device (1010) may comprise an OIS-y coil (1442). A driving part may comprise an OIS-y coil (1442). An OIS coil (1440) may comprise an OIS-y coil (1442). The OIS-y coil (1442) may be disposed to a position perpendicular to a placement direction of OIS-x coil (1441). The OIS-y coil (1442) may interact with the OIS-y magnet (1422). The OIS-y coil (1442) may move the OIS-y magnet (1422) to a y axis direction. The OIS-y coil (1442) may move the OIS-y magnet (1422) to a y axis direction through interaction with the OIS-y magnet (1422). The OIS-y coil (1442) may face the OIS-y magnet (1422). The OIS-y coil (1442) may face the OIS-y magnet (1422). The OIS-y coil (1442) may be disposed on a position corresponding to that of OIS-y magnet (1422). The OIS-y coil (1442) may be overlapped with the OIS-y magnet (1422) to a y axis direction. The OIS-y coil (1442) may be disposed on a substrate (1120). The OIS-y coil (1442) may be disposed on a base (1110). The OIS-y coil (1442) may be disposed on a fixed part.

The lens driving device (1010) may comprise an AF sensor (1450). A driving part may comprise an AF sensor (1450). The AF sensor (1450) may comprise a Hall sensor. The AF sensor (1450) may detect the magnetism of AF magnet (1410). The AF sensor (1450) may be so disposed as to face the AF magnet (1410). The AF sensor (1450) may face the AF magnet (1410). The AF sensor (1450) may be disposed on a position corresponding to that of the AF magnet (1410). The AF sensor (1450) may be disposed on a substrate (1120). The AF sensor (1450) may be disposed on a base (1110). The AF sensor (1450) may be disposed on a fixed part. The AF sensor (1450) may be disposed on a lateral plate (1142) of cover (1140). The AF sensor (1450) may be disposed within an AF coil (1430). The AF sensor (1450) may detect the movement or position of a lens to an optical axis direction. A sensed value detected by the AF sensor may be used for auto focus feedback control.

The lens driving device (1010) may comprise an OIS sensor (1460). A driving part may comprise an OIS sensor (1460). The OIS sensor (1460) may comprise a Hall sensor. The OIS sensor (1460) may detect the magnetism of OIS magnet (1420). The OIS sensor (1460) may be so disposed as to face the OIS magnet (1420). The OIS sensor (1460) may face the OIS magnet (1420). The OIS sensor (1460) may be disposed at a position corresponding to that of the OIS magnet (1420). The OIS sensor (1460) may be disposed on a substrate (1120). The OIS sensor (1460) may be disposed on a base (1110). The OIS sensor (1460) may be disposed on a fixed part. The OIS sensor (1460) may be disposed on a lateral plate (1142) of cover (1140). The OIS sensor (1460) may be disposed within an OIS coil (1440). The OIS sensor (1460) may detect the movement or position of a lens to a direction perpendicular to an optical axis. A sensed value detected by the OIS sensor (1460) may be used for OIS feedback control.

The lens driving device (1010) may comprise an OIS-x sensor (1461). A driving part may comprise an OIS-x sensor (1461). An OIS sensor (1460) may comprise an OIS-x sensor (1461). The OIS-x sensor (1461) may comprise a Hall sensor. The OIS-x sensor (1461) may detect the magnetism of OIS-x magnet (1421). The OIS-x sensor (1461) may be so disposed as to face the OIS-x magnet (1421). The OIS-x sensor (1461) may face the OIS-x magnet (1421). The OIS-x sensor (1461) may be disposed at a position corresponding to that of the OIS-x magnet (1421). The OIS-x sensor (1461) may be disposed on a substrate (1120). The OIS-x sensor (1461) may be disposed on a base (1110). The OIS-x sensor (1461) may be disposed on a fixed part. The OIS-x sensor (1461) may be disposed on a lateral plate (1142) of cover (1140). The OIS-x sensor (1461) may be disposed within an OIS-x coil (1441). The OIS-x sensor (1461) may detect the movement or position of a lens to an x axis direction. A sensed value detected by the OIS-x sensor (1461) may be used for OIS feedback control.

The lens driving device (1010) may comprise an OIS-y sensor (1462). A driving part may comprise an OIS-y sensor (1462). An OIS sensor (1460) may comprise an OIS-y sensor (1462). The OIS-y sensor (1462) may comprise a Hall sensor. The OIS-y sensor (1462) may detect the magnetism of OIS-y magnet (1422). The OIS-y sensor (1462) may be so disposed as to face the OIS-y magnet (1422). The OIS-y sensor (1462) may face the OIS-y magnet (1422). The OIS-y sensor (1462) may be disposed on a position corresponding to that of the OIS-y magnet (1422). The OIS-y sensor (1462) may be disposed on a substrate (1120). The OIS-y sensor (1462) may be disposed on a base (1110). The OIS-y sensor (1462) may be disposed on a fixed part. The OIS-y sensor (1462) may be disposed on a lateral plate (1142) of cover (1140). The OIS-y sensor (1462) may be disposed within an OIS-y coil (1442). The OIS-y sensor (1462) may detect the movement or position of a lens to a y axis direction. A sensed value detected by the OIS-y sensor (1462) may be used for OIS feedback control.

The lens driving device (1010) may comprise a guide part. The guide part may guide the movement of driving part. The guide part may comprise a first guide part to an optical axis direction (z axis direction), a second guide part to a first direction (x axis direction) perpendicular to an optical axis, and a third guide part to a second direction (y axis direction) perpendicular to both the optical axis and the first direction.

The lens driving device (1010) may comprise a ball. A guide part may comprise a ball. The ball may take a spherical shape. The ball may roll and move over a contacted surface. The ball may be disposed between a fixed part and a moving part. The ball may be disposed between a fixed part and a first moving part. The ball may be disposed between a first moving part and a second moving part.

The lens driving device (1010) may comprise an OIS ball (1510). A guide part may comprise an OIS ball (1510). The OIS ball (1510) may be disposed between a housing (1210) and a lens holder (1310). The OIS ball (1510) may be disposed on an upper surface of lens holder (1310). The OIS ball (1510) may be disposed between an upper plate (1211) of housing (1210) and lens holder (1310). The OIS ball (1510) may be so disposed as to contact any one or more of a metal member (1230) of first moving part and a metal member (1330) of second moving part. At this time, even other configurations are contacted by grease other than the OIS ball (1510), while a surface of OIS ball (1510) is coated with other configurations such as grease, it is comprised as being contacted by the OIS ball (1510). The OIS ball (1510) may be formed with a metal. Alternatively, the OIS ball (1510) may be formed with an injection. The OIS ball (1510) may roll along one surface of metal member (1230). The OIS ball (1510) may be so disposed as to roll along a lower surface of metal member (1230). The OIS ball (1510) may be so disposed as to roll along one surface of metal member (1330). The OIS ball (1510) may be so disposed as to roll along an upper surface of metal member (1330).

When the lens holder (1310) moves, the OIS ball (1510) may guide the lens holder (1310) to move to a direction perpendicular to an optical axis relative to the housing. The OIS ball (1510) may contact the lens holder (1310) and the housing (1210). The OIS ball (1510) may connect the lens holder (1310) and the housing (1210). The OIS ball (1510) may guide the lens holder (1310) to move to an x axis direction. The OIS ball (1510) may guide the movement of lens holder (1310) to a y axis direction. The OIS ball (1510) may guide the movement of lens holder (1310) to both x axis direction and y axis direction. That is, the OIS ball (1510) may not distinguish the x axis ball from y axis ball and may be formed with all-in-one type using a single ball. Because of building the OIS ball (1510) with all-in-one type, there may be a problem of cross talk where x axis driving force and y axis driving force are affected, however, the cross talk can be minimized through a wire (1540) according to the second exemplary embodiment of the present invention. The OIS ball (1510) may be disposed between the housing (1210) and the lens holder (1310) to an optical axis direction. The OIS ball (1510) may be supported by an upper plate of housing (1210) and may be downwardly pressed from the lens holder (1310), through which the OIS ball (1510) may maintain a contacted state with the upper plate of housing (1210) and the lens holder (1310). The OIS ball (1510) may be coated with grease.

The OIS ball (1510) may be disposed at an upper surface of lens holder (1310). The OIS ball (1510) may be disposed on the lens holder (1310). The OIS ball (1510) may be disposed at a corner area of an upper surface of lens holder (1310). The OIS ball (1510) may be respectively disposed on four corner areas of upper surface of lens holder (1310). The OIS ball (1510) may be disposed on an opposite side of image sensor (1060) relative to the lens holder (1310).

The OIS ball (1510) may comprise a plurality of balls. The plurality of balls may be disposed on an imaginary plane perpendicular to an optical axis. The plurality of balls may comprise four (4) balls. The said four balls may be correspondingly formed on four corner areas of upper surface of lens holder (1310).

The lens driving device (1010) may comprise an AF ball (1520). A guide part may comprise an AF ball (1520). The AF ball (1520) may be disposed between a base (1110) and a housing (1210). The AF ball (1520) may be overlapped with the upper plate (1141) of the cover (1140) in an optical axis direction. Through this, a phenomenon in which the AF ball (1520) is separated in an optical axis direction can be prevented by being blocked by the upper plate (1141) of the cover (1140). The AF ball (1520) may be disposed between the base (1110) and the housing (1210) to a direction perpendicular to an optical axis. The AF ball (1520) may contact the base (1110) and the housing (1210). The AF ball (1520) may connect the base (1110) and the housing (1210). The AF ball (1520) may guide the movement of housing (1210) to an optical axis direction (z axis direction) relative to the base (1110). The AF ball (1520) may be supported by the base (1110), and may be pressed to an inner side from the housing (1210), through which the AF ball (1520) may maintain a contacted state with the base (1110) and the housing (1210). The AF ball (1520) may be coated with grease. The AF ball (1520) may be formed with a metal. Alternatively, the AF ball (1520) may be formed with an injection.

The AF ball (1520) may comprise a plurality of balls. The plurality of balls may be disposed on an imaginary plane parallel with an optical axis. The AF ball (1520) may be disposed on both sides of AF magnet (1410). For example, three AF balls (1520) may be disposed on one side of AF magnet (1410) and three AF balls (1520) may be disposed on the other side of AF magnet (1410). The AF ball (1520) may comprise first to third balls overlapped to an optical axis direction. The second ball may be disposed between the first ball and the third ball. At this time, a diameter of second ball may be smaller than that of first and third ball.

The lens driving device (1010) may comprise an elastic member (1530). The guide part may comprise an elastic member (1530). The elastic member (1530) may have elasticity. The elastic member (1530) may be electrically conductive. The elastic member (1530) may comprise a metal. The elastic member (1530) may comprise a spring. The elastic member (1530) may comprise a leaf spring. The elastic member (1530) may be coupled to the lens holder (1310). The elastic member (1530) may be spaced apart from the housing (1210). The elastic member (1530) may be spaced apart from base (1110). The elastic member (1530) may be spaced apart from a substrate (1120). The elastic member (1530) may be spaced apart from the first moving part. The elastic member (1530) may be spaced apart from the fixed part. The elastic member (1530) may connect a lens holder (1310) and a wire (1540). The elastic member (1530) may be disposed to a direction perpendicular to an optical axis. The elastic member (1530) may be so disposed as to be perpendicular to the wire (1540). As a modification, the elastic member (1530) may be a wire.

The elastic member (1530) may comprise a first coupling part (1531) coupled with the lens holder (1310). The elastic member (1530) may comprise a second coupling part (1532) coupled with the wire (1540). The elastic member (1530) may comprise a connecting part (1533) connecting the first coupling part (1531) and the second coupling part (1532). The connecting part (1533) may be an elastic part or a leg. The elastic member may have elasticity. The second coupling part (1532) may comprise a hole through which the wire (1540) passes.

The lens driving device (1010) may comprise a support member. The support member may comprise a wire (1540). The lens driving device (1010) may comprise a wire (1540). The guide part may comprise a wire (1540). The wire (1540) may be an elastic member. The wire (1540) may have elasticity. The wire (1540) may be formed with a metal. The wire (1540) may be formed with a material having electric conductivity. The wire (1540) may movably support a lens holder (1310) relative to a housing (1210). The wire (1540) may be coupled to an elastic member (1530). The wire (1540) may be coupled to a metal member (1230). The wire (1540) may connect a first moving part and a second moving part. The wire (1540) may connect the metal member (1230) and the elastic member (1530). An upper end of wire (1540) may be coupled to the metal member (1230). The upper end of wire (1540) may be coupled to the metal member (1230) using a solder or welding. A lower end of wire (1540) may be coupled to the elastic member (1530). The upper end of wire (1540) may be coupled to the metal member (1230) using a solder or welding. The wire (1540) may be disposed parallel with an optical axis, through which a lower end of wire (1540) may be moved to a direction perpendicular to an optical axis relative to an upper end of wire (1540). Furthermore, when a driving force is removed, the lower end of wire (1540) may be restored to a position corresponding to the upper end of wire (1540) to an optical axis direction.

The wire (1540) may comprise a plurality of wires. The wire (1540) may comprise eight (8) wires. The wire (1540) may comprise first to eighth wire. Two wires (1540) may be respectively disposed on each of four (4) corner areas of upper plate (1211) of housing (1210). The plurality of wires may be mutually and symmetrically disposed on an optical axis.

As a modification, the wire (1540) may comprise four wires. The wire (1540) may comprise first to fourth wire. One wire (1540) may be respectively disposed on each of upper plate (1211) of four corner areas of housing (1210). The said four wires may be mutually and symmetrically disposed on an optical axis.

The wire (1540) may comprise a first wire disposed at one side of OIS-x magnet (1421). The wire (1540) may comprise a second wire disposed at the other side of OIS-x magnet (1421). An imaginary straight line connecting the first wire and the second wire may pass the OIS-x magnet (1421). That is, the OIS-x magnet (1421) may be so disposed as to be overlapped with the first wire and the second wire in between the first wire and the second wire. Furthermore, the second wire may be disposed at one side of OIS-y magnet (1422). The wire (1540) may comprise a third wire disposed on the other side of OIS-y magnet (1422). An imaginary straight line connecting the second wire and the third wire may pass the OIS-y magnet (1422). That is, the OIS-y magnet (1422) may be so disposed as to be overlapped with the second wire and the third wire between the second wire and the third wire.

Hereinafter, the driving (or operation) of lens driving device will be described with reference to accompanying drawings according to a second exemplary embodiment of the present invention.

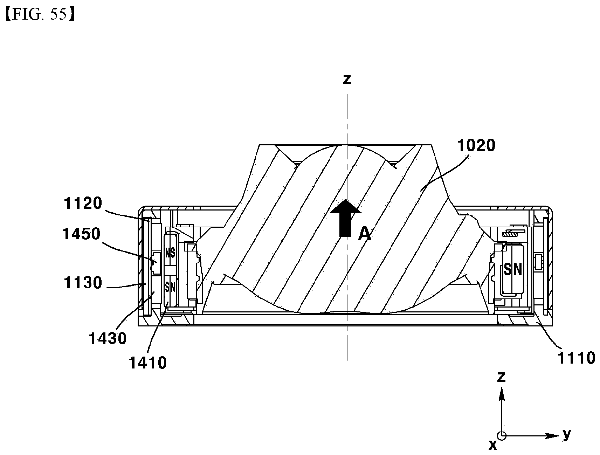

First, auto focusing function will be explained with reference to FIGS. 54 and 55.

FIGS. 54 and 55 are schematic views for explaining the auto focus driving of lens driving device according to a second exemplary embodiment of present invention.

While at an initial position where no current is applied to an AF coil (1430), a first moving part may be disposed on an upper surface of lower plate of base (1110). When a current is applied to the AF coil (1430), the AF magnet (1410) may be upwardly moved along an optical axis through an electromagnetic interaction between the AF coil (1430) and the AF magnet (1410) (see FIG. 55 A). At this time, the second moving part, the first moving part and the lens may be moved together along with the AF magnet (1410). As a result, a distance between the lens and image sensor may be changed to adjust a focus of image captured by the image sensor through the lens.

Meanwhile, the AF sensor (1450), in the course of moving process of AF magnet (1410), may detect the intensity of magnetic field of AF magnet (1410) to detect the movement of position of the AF magnet (1410). The movement or position detected by the AF sensor (1450) may be used for auto focus feedback control.

In another example, at an initial position where no current is applied to the AF coil (1430), the first moving part may be so disposed as to be spaced apart from the base (1110). At this time, when a reverse current is applied to the AF coil (1430), the first moving part may downwardly move toward a lower plate of base (1110). Conversely, when a forward current is applied to the AF coil (1430), the first moving part may move upwardly toward an upper plate (1141) of cover (1140). Even in this case, the lens may move along with the first moving part and the second moving part to adjust a distance between the lens and the image sensor.

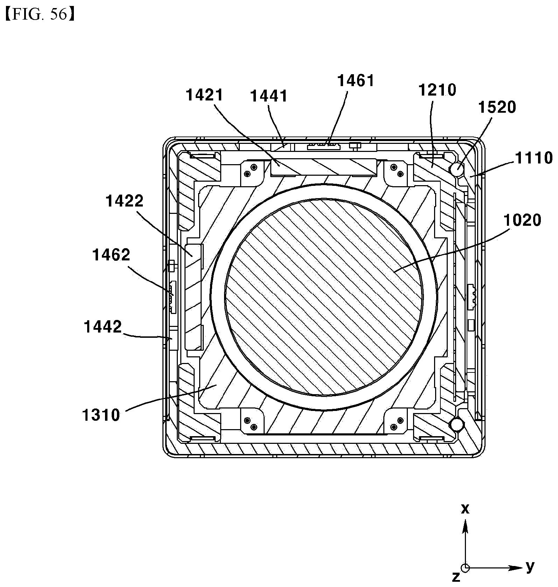

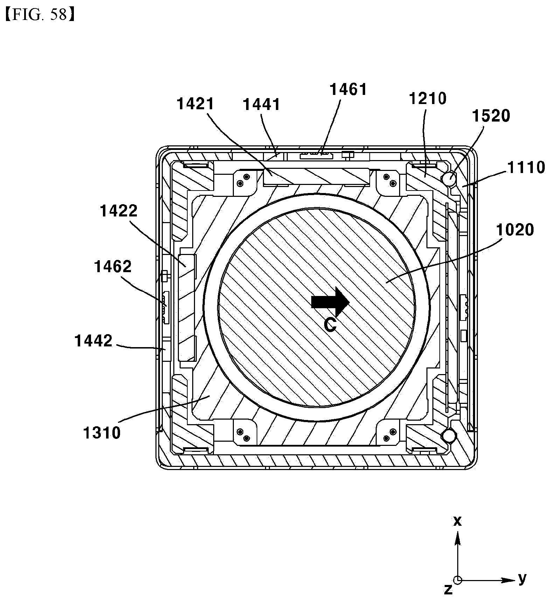

Next, an OIS function will be described with reference to FIGS. 56 to 58.

FIGS. 56 to 58 are schematic views for explaining an OIS driving of a lens driving device according to a second exemplary embodiment of the present invention.

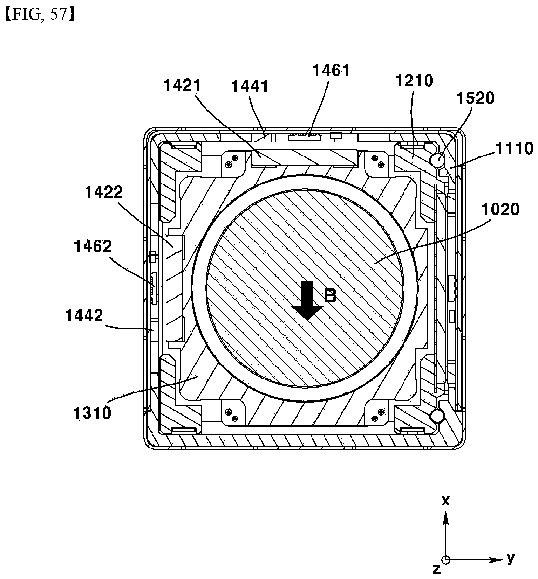

A second moving part may be so disposed as to be spaced apart from a first moving part at an initial position where no current is applied to an OIS coil (1440). At this time, when a forward current is applied to an OIS-x coil (1441), the OIS-x magnet (1421) may be moved to a direction distancing from the OIS-x coil (1441) on x axis direction through an electromagnetic interaction between the OIS-x coil (1441) and the OIS-x magnet (1421) (see FIG. 57 B). Conversely, when a reverse current is applied to the OIS-x coil (1441), the OIS-x magnet (1421) may be moved to a direction nearing to the OIS-x coil (1441) on x axis direction through an electromagnetic interaction between the OIS-x coil (1441) and the OIS-x magnet (1421). Meantime, when a forward current is applied to the OIS-y coil (1442), the OIS-y magnet (1422) may be moved to a direction distancing from the OIS-y coil (1442) on y axis direction through an electromagnetic interaction between the OIS-y coil (1442) and the OIS-y magnet (1422) (see 58 C). Conversely, when a reverse current is applied to the OIS-y coil (1442), the OIS-y magnet (1422) may be moved to a direction nearing to the OIS-y coil (1442) on y axis direction through an electromagnetic interaction between the OIS-y coil (1442) and the OIS-y magnet (1422).

The OIS sensor (1460) may detect the intensity of magnetic field of OIS magnet (1420) during the movement process of OIS magnet (1420) to detect the movement or position of the OIS magnet (1420). The movement of position of OIS magnet (1420) detected by the OIS sensor (1460) may be used for OIS feedback control.

Hereinafter, a camera device will be described with reference to the accompanying drawings according to a second exemplary embodiment of the present invention.

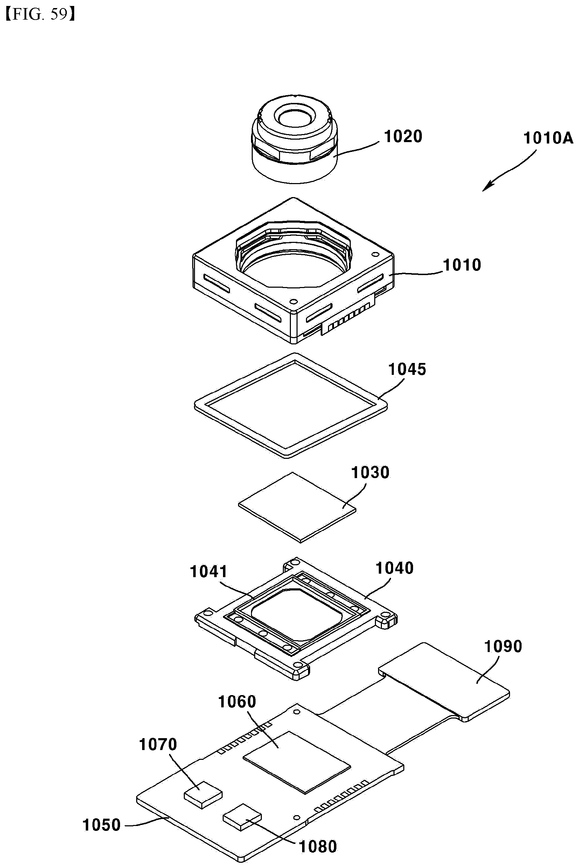

FIG. 59 is an exploded perspective view of a camera device according to a second exemplary embodiment of the present invention.

A camera device (1010A) may comprise a camera module. The camera device (1010A) may comprise a lens module (1020). The lens module (1020) may comprise at least one lens. The lens may be disposed on a position corresponding to that of an image sensor (1060). The lens module (1020) may comprise a lens and a barrel. The lens module (1020) may be coupled to a lens holder (1310) of lens driving device (1010). The lens module (1020) may be screw-connected and/or coupled to the lens holder (1310) using an adhesive. The lens module (1020) may be integrally moved with the lens holder (1310).

The camera device (1010A) may comprise a filter (1030). The filter (1030) may function to prevent a light of particular frequency band from the light having passed the lens module (1020) from being incident onto an image sensor (1060). The filter (1030) may be disposed to be parallel with an x-y plane. The filter (1030) may be disposed between the lens module (1020) and the image sensor (1060). The filter (1030) may be disposed on a sensor base (1040). As a modification, the filter (1030) may be disposed on a base (1110). The filter (1030) may comprise an infrared filter. The infrared filter may prevent the image sensor (1060) from being incident on by a light of infrared region.

The camera device (1010A) may comprise a sensor base (1040). The sensor base (1040) may be disposed between the lens driving device (1010) and a PCB (1050). The sensor base (1040) may comprise a protrusion (1041) disposed with the filter (1030). A portion of sensor base (1040) disposed with the filter (1030) may be formed with an opening to allow a light having passed the filter (1030) to be incident on the image sensor (1060). An adhesive member (1045) may couple or attach the base (1310) of lens driving device (1010) to the sensor base (1040). An adhesive member (1045) may function to additionally prevent foreign objects from being introduced into the lens driving device (1010). The adhesive member (1045) may comprise one or more of epoxy, thermosetting adhesive and UV-curable adhesive.

The camera device (1010A) may comprise a PCB (Printed Circuit Board, 1050). The PCB (1050) may be a board or a circuit board. The PCB (1050) may be disposed with a lens driving device (1010). A sensor base (1040) may be disposed between the PCB (1050) and the lens driving device (1010). The PCB (1050) may be electrically connected with the lens driving device (1010). The PCB (1050) may be disposed with an image sensor (1060). The PCB (1050) may be disposed with various circuits, elements and a controller for transmitting an image captured on the image sensor (1060) to an outside device by converting the same to an electric signal.

The camera device (1010A) may comprise an image sensor (1060). The image sensor (1060) may be a configuration in which a light having passed the lens and the filter (1030) is incident to be captured as an image. The image sensor (1060) may be mounted with a PCB (1050). The image sensor (1060) may be electrically connected to the PCB (1050). For example, the image sensor (1060) may be coupled to the PCB (1050) using an SMT (Surface Mounting Technology. As another example, the image sensor (1060) may be coupled to the PCB (1050) using a flip chip technology. The image sensor (1060) may be disposed on the same optical axis as that of a lens. That is, an optical axis of the image sensor (1060) and an optical axis of lens may be aligned. The image sensor (1060) may convert a light irradiated on an effective image region of the image sensor (1060) to an electric signal. The image sensor (1060) may be any one of a CCD (charge coupled device), an MOS (metal oxide semi-conductor), a CPD and a CID.

The camera device (1010A) may comprise a motion sensor (1070). The motion sensor (1070) may be mounted on a PCB (1050). The motion sensor (1070) may be electrically connected to a controller (1080) through a circuit pattern provided to the PCB (1050). The motion sensor (1070) may output rotational angular velocity information using the movement of camera device (1010A). The motion sensor (1070) may comprise a 2-axis, a 3-axis gyro sensor, or an angular velocity sensor.

The camera device (1010A) may comprise a controller (1080). The controller (1080) may be disposed on a PCB (1050). The controller (1080) may be electrically connected to a coil (1330) of lens driving device (1010). The controller (1080) may individually control the direction, intensity and amplitude of current supplied to the (1330). The controller (1080) may control the lens driving device (1010) to perform an auto focus function and/or OIS function. Furthermore, the controller (1080) may perfume the auto focus feedback control and/or OIS feedback control for the lens driving device (1010).

The camera device (1010A) may comprise a connector (1090). The connector (1090) may be electrically connected to a PCB (1050). The connector (1090) may comprise a port for being connected to an outside device.

Hereinafter, an optical device will be described with reference to the accompanying drawings according to a second exemplary embodiment of the present invention.

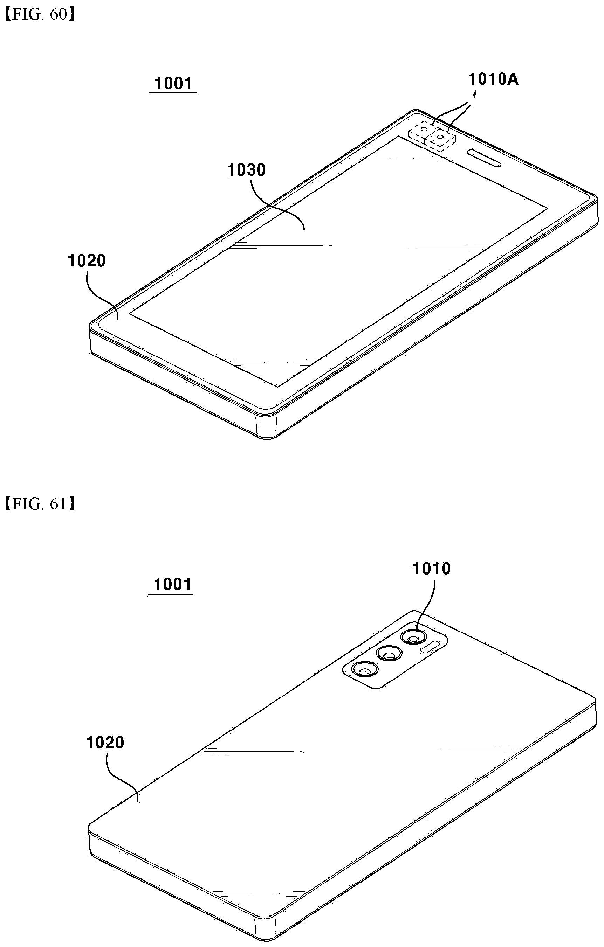

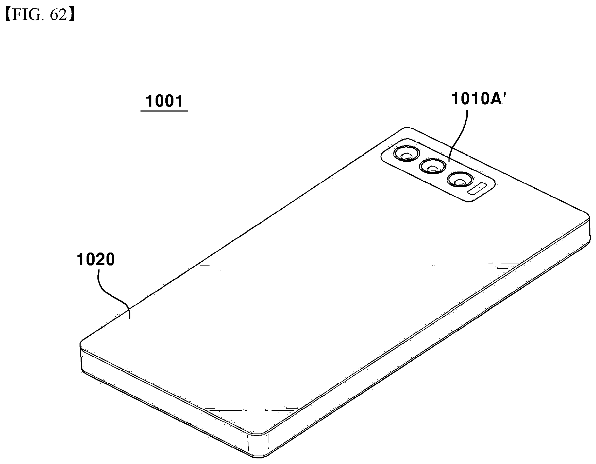

FIG. 60 is a perspective view of an optical device according to a second exemplary embodiment of the present invention, FIG. 61 is a perspective view of an optical device seen from a different direction of FIG. 59 according to a second exemplary embodiment of the present invention, and FIG. 62 is a perspective view of an optical device according to a modification.

An optical device (1001) may comprise any one or more of hand phones, portable phones, portable terminals, mobile terminals, smart phones, smart pads, portable smart devices, digital cameras, notebook computers (laptop computers), digital broadcasting terminals, PDAs (Personal Digital Assistants), PMPs (Portable Multimedia Players) and navigations. The optical device (1001) may comprise any device for shooting or photographing an image or photograph.

The optical device (1001) may comprise a body (1020). The optical device (1001) may comprise a camera device (1010A). The camera device (1010A) may be disposed on the body (1020). The camera device (1010A) may photograph an object. The optical device (1001) may comprise a display (1030). The display (1030) may be disposed on the body (1020). The display (1030) may output any one or more of an image or video photographed by the camera device (1010A). The display (1030) may be disposed on a first surface of body (1020). The camera device (1010A) may be disposed on any one or more of a first surface of body (1020) and a second surface opposite to the first surface. As shown in FIG.61, the camera device (10A) may have its triple cameras disposed to a longitudinal direction. As shown in FIG. 62, a camera device (10A') has its triple cameras disposed to a cross direction.

Although the foregoing has divisibly explained the first exemplary embodiment and the second exemplary embodiment of the present, some of the first exemplary embodiment may be changed to some of second exemplary embodiment. Alternatively, some of the second exemplary embodiment may be changed to some of first exemplary embodiment. Meantime, the third exemplary embodiment of the present invention may comprise some of the first and second exemplary embodiments. Particularly, the first exemplary embodiment of the present invention is a modification and may comprise a wire (1540) of second exemplary embodiment.

Although the exemplary embodiments of the present invention have been described with reference to the attached drawings, it should be appreciated by those skilled in the art that the present invention may be implemented in other detailed forms without changing the technical ideas and essential characteristics. Therefore, it should be understood that the aforementioned exemplary embodiments are exemplary in all respects and not limiting.

## Claims

1. A lens driving device comprising:
a housing;
a lens holder disposed in the housing;
a first magnet disposed on the housing;
a second magnet disposed on the lens holder;
a first coil configured to move the first magnet in an optical axis direction through an interaction with the first magnet;
a second coil configured to move the second magnet in a direction perpendicular to an optical axis through an interaction with the second magnet;
a first ball disposed between the housing and the lens holder; and
a wire movably supporting the lens holder against the housing.

2. The lens driving device of claim 1, comprising an elastic member coupled to the lens holder,
wherein the wire is coupled to the elastic member.

3. The lens driving device of claim 2, comprising a metal member disposed on the housing,
wherein the wire connects the metal member and the elastic member.

4. The lens driving device of claim 3, wherein the housing comprises an upper plate and a lateral plate,
wherein the first magnet is disposed on the lateral plate of the housing,
wherein the metal member is disposed on the upper plate of the housing, and
wherein an upper end portion of the wire is coupled to the metal member and a lower end portion of the wire is coupled to the elastic member.

5. The lens driving device of claim 4, wherein the first ball is disposed between the upper plate of the housing and the lens holder.

6. The lens driving device of claim 5, wherein the first ball is disposed to be rolled along one surface of the metal member.

7. The lens driving device of claim 6, wherein two of the wires are disposed on each of the four corner areas of the upper plate of the housing, respectively.

8. The lens driving device of claim 1, wherein the second magnet comprises a first axis driving magnet and a second axis driving magnet disposed perpendicular to an arrangement direction of the first axis driving magnet,
wherein the wire comprises a first wire disposed at one side of the first axis driving magnet and a second wire disposed at the other side of the first axis driving magnet, and
wherein an imaginary straight line connecting the first wire and the second wire passes through the first axis driving magnet.

9. The lens driving device of claim 1, wherein the wire is disposed in parallel to the optical axis.

10. A camera device, comprising:
a PCB (Printed Circuit Board);
an image sensor disposed on the PCB;
the lens driving device of claim 1 disposed on the PCB; and
a lens coupled to the lens holder of the lens driving device.
